# EUROPEAN PATENT APPLICATION

(11) **EP 4 393 999 A1**
(43) Date of publication of application: **03.07.2024**
(21) Application number: 22860910.3
(22) Date of filing: 20.05.2022
(51) Int. Cl.: C08L 75/04, B32B 27/20, B32B 27/40, B65D 30/02, C08G 18/65, C08G 18/74

(54) **AQUEOUS POLYURETHANE COMPOSITION, HEAT-RESISTANT COATING MATERIAL, FIRST LAMINATE, BAG, SECOND LAMINATE, METHOD FOR PRODUCING FIRST LAMINATE, AND METHOD FOR PRODUCING SECOND LAMINATE**

(30) Priority: 26.08.2021 JP 2021138372
(71) Applicant: Mitsui Chemicals, Inc., Tokyo 104-0028 (JP)
(72) Inventor: MIYANAGA, Tomoharu, Sodegaura-shi, Chiba 299-0265 (JP); FUKUDA, Kazuyuki, Sodegaura-shi, Chiba 299-0265 (JP)
(74) Representative: Hoffmann Eitle
(86) International application number: PCT/JP2022/020951
(87) International publication number: WO 2023/026613

(57) **Abstract**

The aqueous polyurethane composition contains polyurethane resin and inorganic particles. The polyurethane resin includes a reaction product of a polyisocyanate component including polyisocyanate having a ring structure, and a polyol component including a macropolyol and an active hydrogen group-containing compound containing a hydrophilic group. Relative to the total amount of the polyurethane resin and the inorganic particles, the blending ratio of the polyurethane resin is 5% by mass or more and 95% by mass or less, and the blending ratio of the inorganic particles is 5% by mass or more and 95% by mass or less. The inorganic particles have an average particle size of 5 nm or more and 1000 nm or less.

## Description

### TECHNICAL FIELD

The present invention relates to an aqueous polyurethane composition, a heat-resistant coating agent, a first laminate, a bag, a second laminate, a method for producing the first laminate, and a method for producing the second laminate.

### BACKGROUND ART

In recent years, in the field of packaging materials, there has been a demand for the use of single-material composite films due to recycling and other requirements.

As such a composite film, a polyethylene laminate film produced by bonding two polyethylene films together via a two-component curable urethane adhesive has been proposed (see, for example, Patent Document 1 below).

### Citation List

### Patent Document

Patent Document 1: Japanese Unexamined Patent Publication No. 2018-202618

### SUMMARY OF THE INVENTION

### PROBLEM TO BE SOLVED BY THE INVENTION

On the other hand, when such a composite film is used to produce a packaging bag, the composite film may be folded in two, and one surface of the composite film thus folded may be overlaid on the other surface thereof and then heat-sealed. In this case, only one surface of the composite film is heat-sealed, while the other surface of the composite film is not.

Since the polyethylene laminate film of Patent Document 1 is a composite film of a single material (polyethylene), both one and the other surfaces of the polyethylene laminate film are polyethylene films. In other words, one surface and the other surface of the polyethylene laminate film are substrates having the same melting point and are heat-sealed at the same temperature.

Therefore, an attempt to heat-seal only one surface of the polyethylene laminate film may cause the other surface thereof to be heat-sealed as well.

The present invention provides an aqueous polyurethane composition capable of suppressing heat sealing of one surface of a base layer when the other surface of the base layer is heat-sealed, a heat-resistant coating agent containing the aqueous polyurethane composition, a first laminate produced using the aqueous polyurethane composition, a bag consisting of the first laminate, a second laminate obtained using the aqueous polyurethane composition, a method for producing the first laminate, and a method for producing the second laminate.

### MEANS FOR SOLVING THE PROBLEM

The present invention [1] is an aqueous polyurethane composition including polyurethane resin and inorganic particles, the polyurethane resin including a reaction product of a polyisocyanate component including polyisocyanate having a ring structure, and a polyol component including a macropolyol and an active hydrogen group-containing compound containing a hydrophilic group, in which relative to a total amount of the polyurethane resin and the inorganic particles, a blending ratio of the polyurethane resin is 5% by mass or more and 95% by mass or less, and a blending ratio of the inorganic particles is 5% by mass or more and 95% by mass or less, and the inorganic particles have an average particle size of 5 nm or more and 1000 nm or less.

The present invention [2] includes the aqueous polyurethane composition described in [1], in which the active hydrogen group-containing compound containing a hydrophilic group is a compound containing a combination of a carboxy group, and a hydroxy group and/or an amino group.

The present invention [3] includes the aqueous polyurethane composition described in [1] or [2], in which the inorganic particles are colloidal inorganic particles.

The present invention [4] includes a heat-resistant coating agent containing the aqueous polyurethane composition according to any one of the above-described [1] to [3].

The present invention [5] includes a first laminate, sequentially including a heat-resistant layer; a polyolefin-based first film; an adhesive layer; and a polyolefin-based second film toward one side in a thickness direction, in which the heat-resistant layer is a dried product of the aqueous polyurethane composition described in any one of the above-described [1] to [3].

The present invention [6] includes the first laminate described in [5], in which the heat-resistant layer has a mass per unit area of 0.1 g/m² or more and 3.3 g/m² or less.

The present invention [7] includes the first laminate described in [5] or [6], in which the inorganic particles have an average particle size of 5 nm or more and 170 nm or less.

The present invention [8] includes the first laminate described in any one of the above-described [5] to [7], in which the heat-resistant layer has a hardness of 0.35 N/mm² or more and 0.6 N/mm² or less, the hardness being measured under the following conditions:

### (Conditions)

A Martens hardness (HMs, N/mm²) is measured on a surface of the heat-resistant layer with a coating weight of 1.5 g using an ultra-micro hardness tester. In the measurement, a test force is 0.5 mN, a set depth is 1.0 µm, and a load speed is 3.0 mN/sec.

The present invention [9] includes the first laminate described in any one of the above-described [5] to [8], in which the first film and the second film contain at least one selected from the group consisting of polyethylene, polypropylene, an ethylene-based copolymer, and a propylene-based copolymer.

The present invention [10] includes the first laminate described in any one of the above-described [5] to [9], in which the heat-resistant layer is disposed directly on another surface in the thickness direction of the first film, and the other surface in the thickness direction of the first film is subjected to at least one surface treatment selected from the group consisting of corona treatment, flame treatment, plasma treatment, and ultraviolet treatment.

The present invention [11] includes the first laminate described in any one of the above-described [5] to [10], including a gas barrier layer between the heat-resistant layer and the first film, and/or between the first film and the adhesive layer, and/or between the adhesive layer and the second film.

The present invention [12] includes the first laminate described in [11], in which the gas barrier layer is a dried product of a polyurethane dispersion containing polyurethane resin that is a reaction product of an isocyanate group-terminated prepolymer and a chain extender, the isocyanate group-terminated prepolymer being a reaction product of a polyisocyanate component including xylylene diisocyanate, and a polyol component including a diol having 2 to 6 carbon atoms and an active hydrogen group-containing compound containing a hydrophilic group.

The present invention [13] includes the first laminate described in [11] or [12], in which the gas barrier layer has a mass per unit area of 0.8 g/m² or more and 3.5 g/m² or less.

The present invention [14] includes the first laminate described in any one of the above-described [5] to [13], in which the first film and the second film are both identical.

The present invention [15] includes a bag being made of the first laminate described in any one of the above-described [5] to [14].

The present invention [16] includes a second laminate, sequentially including a substrate layer and a heat-insulating layer toward one side in the thickness direction, in which the heat-resistant layer is a dried product of the aqueous polyurethane composition in any one of the above-described [1] to [3], and the substrate layer is at least one selected from the group consisting of a polyolefin-based film, a polyester-based film, and a nylon film.

The present invention [17] includes the second laminate described in [16], in which an absolute value of a difference between a Martens hardness of one surface in the thickness direction of the heat-resistant layer and a Martens hardness of an other side in the thickness direction of the substrate layer is 0.25 or more and 0.80 or less.

The present invention [18] includes a method for producing a first laminate, including a first step of preparing a polyolefin-based first film; a second step of disposing a heat-resistant layer by applying the aqueous polyurethane composition in any one of the above-described [1] to [3] to another surface in the thickness direction of the polyolefin-based first film and drying the applied composition; a third step of disposing an adhesive layer on one surface in the thickness direction of the polyolefin-based first film; and a fourth step of disposing a polyolefin-based second film on one surface in the thickness direction of the adhesive layer.

The present invention [19] includes a method for producing a second laminate, including a fifth step of preparing a substrate layer; and a sixth step of disposing a heat-resistant layer by applying the aqueous polyurethane composition in any one of the above-described [1] to [3] to one surface in the thickness direction of the substrate layer and drying the applied composition, in which in the fifth step, one surface in the thickness direction of the substrate layer is subjected to at least one surface treatment selected from the group consisting of corona treatment, flame treatment, plasma treatment, and ultraviolet treatment.

### EFFECTS OF THE INVENTION

According to the aqueous polyurethane composition of the present invention, the blending ratio of the polyurethane resin and the blending ratio of the inorganic particles, relative to the total amount of the polyurethane resin and the inorganic particles, are in a predetermined range. Therefore, when one surface of the substrate layer is heat-sealed, heat sealing of the other surface of the substrate layer can be suppressed.

The heat-resistant coating agent of the present invention contains the aqueous polyurethane composition of the present invention. Therefore, when one surface of the substrate layer is heat-sealed, heat sealing of the other surface of the substrate layer can be suppressed.

According to the first laminate of the present invention, the heat-resistant layer is provided on the other surface in the thickness direction of the first film, so that when the second film is heat-sealed, heat-sealing of the first film can be suppressed.

The bag of the present invention is made of the first laminate of the present invention, so that when the second film is heat-sealed, heat-sealing of the first film can be suppressed.

According to the second laminate of the present invention, the heat-resistant layer is provided on one surface in the thickness direction of the substrate layer, so that when the other surface of the substrate layer is heat-sealed, heat-sealing of one surface of the substrate layer can be suppressed.

According to the method for producing the first laminate of the present invention, the heat-resistant layer is disposed by applying the aqueous polyurethane composition of the present invention to the other surface in the thickness direction of the polyolefin-based first film and drying the applied composition. Therefore, the first laminate can be suitably produced.

According to the method for producing the second laminate of the present invention, the heat-resistant layer is disposed by applying the aqueous polyurethane composition of the present invention to one surface in the thickness direction of the substrate layer and drying the applied composition. Therefore, the second laminate can be suitably produced.

### BRIEF DESCRIPTION OF THE DRAWINGS

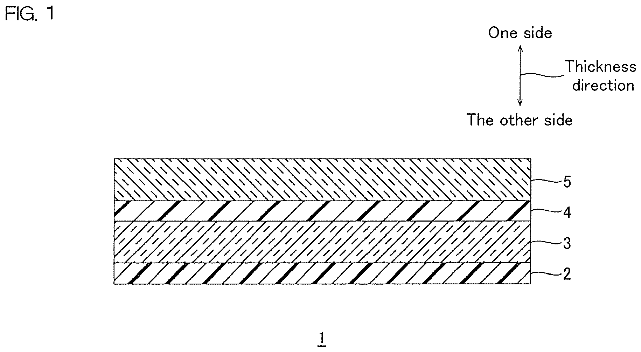

FIG. 1 illustrates a schematic view of one embodiment of a first laminate of the present invention.

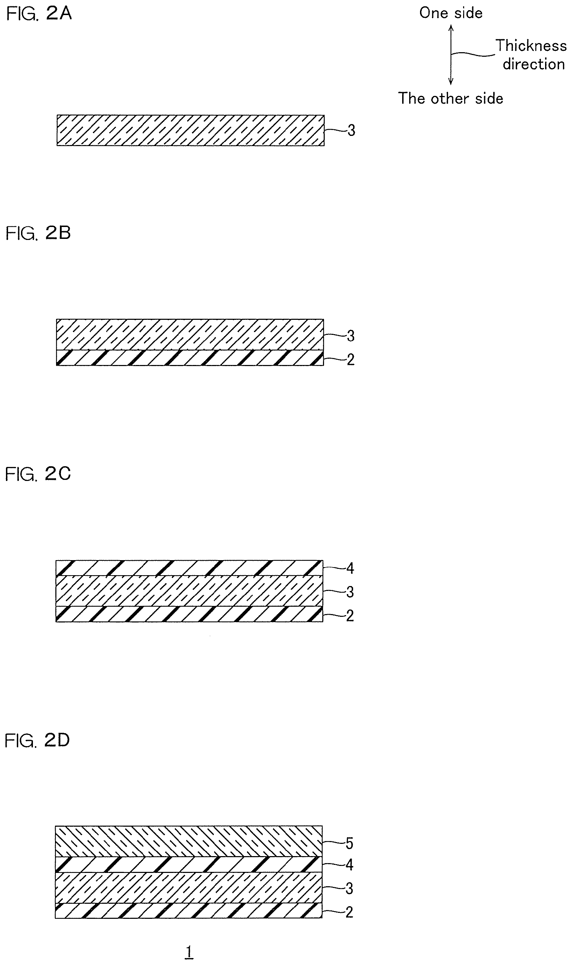

FIGS. 2A to 2D are schematic views illustrating one embodiment of a method for producing the first laminate: FIG. 2A illustrates a first step of preparing a polyolefin-based first film, FIG. 2B illustrates a second step of disposing (laminating) a heat-resistant layer by applying the aqueous polyurethane composition to the other surface in the thickness direction of the polyolefin-based first film and drying the applied composition, FIG. 2C illustrates a third step of disposing (laminating) an adhesive layer on one surface in the thickness direction of the polyolefin-based first film, and FIG. 2D illustrates a fourth step of disposing (laminating) a polyolefin-based second film on one surface in the thickness direction of the adhesive layer.

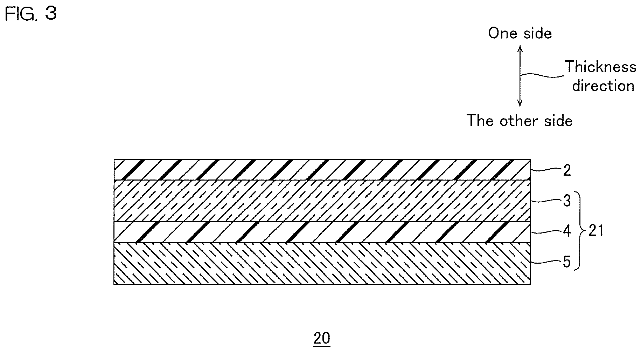

FIG. 3 illustrates a schematic view of one embodiment of a second laminate of the present invention.

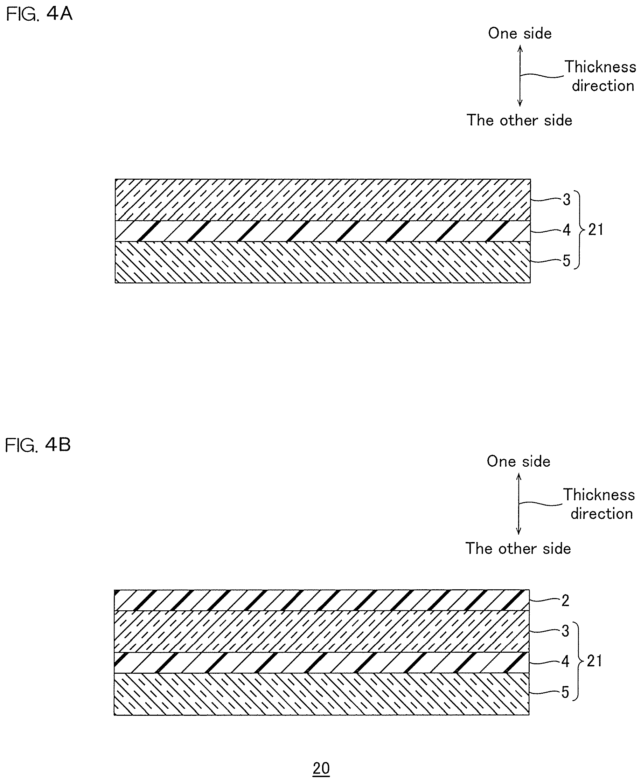

FIGS. 4A and 4B are schematic views illustrating one embodiment of a method for producing the second laminate: FIG. 4A illustrates a fifth step of preparing a substrate layer, and FIG. 4B illustrates a sixth step of disposing a heat-resistant layer by applying the aqueous polyurethane composition to one surface in the thickness direction of the substrate layer and drying the applied composition.

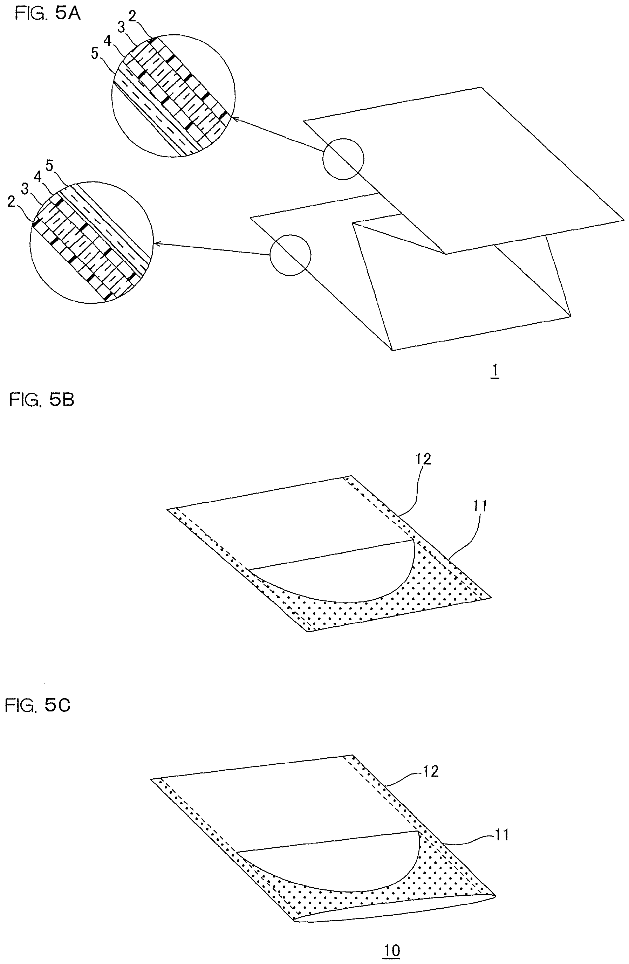

FIGS. 5A to 5C are schematic views illustrating one embodiment of a method for producing a bag (standing pouch) of the present invention: FIG. 5A illustrates a step of preparing a sheet-like laminate, FIG. 5B illustrates a step of bringing opposing polyolefin-based second films into contact with each other and heat-sealing the film, and FIG. 5C illustrates a step of producing a standing pouch.

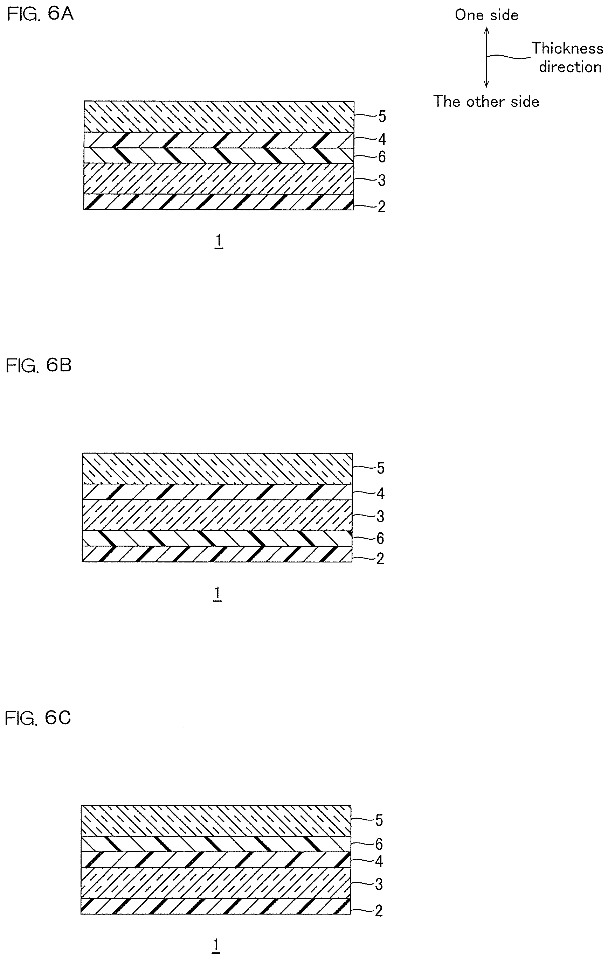

FIG. 6A to 6C are schematic views illustrating a modified example of the laminate of the present invention: FIG. 6A illustrates a laminate provided with a gas barrier layer between the polyolefin-based first film and the adhesive layer, FIG. 6B illustrates a laminate provided with a gas barrier layer between the heat-resistant layer and the polyolefin-based first film, and FIG. 6C illustrates a laminate provided with a gas barrier layer between the adhesive layer and the polyolefin-based second film.

### DESCRIPTION OF THE EMBODIMENTS

Hereinafter, embodiments according to the present invention will be described. The present invention is not to be considered limited to the following embodiments, but modifications can be appropriately made within the scope of the object of the invention.

It should be noted that the numerical range expressed using "to" herein means a range containing the numerical values described before and after "to" as the lower limit value and the upper limit value.

"Film" as used herein is a concept that encompasses not only what is commonly referred to as a "film" but also what is commonly referred to as a "sheet".

### 1. Aqueous polyurethane composition

The aqueous polyurethane composition contains polyurethane resin and inorganic particles.

### [Polyurethane resin]

The polyurethane resin contains a reaction product of a first polyisocyanate component as a polyisocyanate component and a first polyol component as a polyol component.

The first polyisocyanate component preferably contains a polyisocyanate having a ring structure.

Examples of the polyisocyanate having a ring structure include polyisocyanate monomer having a ring structure and polyisocyanate derivative having a ring structure.

Examples of the polyisocyanate monomer having a ring structure include alicyclic polyisocyanate, aromatic polyisocyanate, and araliphatic polyisocyanate.

Examples of the alicyclic polyisocyanate include alicyclic diisocyanate. Examples of the alicyclic diisocyanate include 3-isocyanatomethyl-3,5,5-trimethylcyclohexylisocyanate (isophorone diisocyanate, IPDI), 4,4'-, 2,4'- or 2,2'-methylenebis(cyclohexylisocyanate) or a mixture thereof (H₁₂MDI), 1,3- or 1,4-bis(isocyanatomethyl)cyclohexane or a mixture thereof (H₆XDI), bis(isocyanatomethyl)norbornane (NBDI), 1,3-cyclopentene diisocyanate, 1,4-cyclohexane diisocyanate, 1,3-cyclohexane diisocyanate, methyl-2,4-cyclohexane diisocyanate, and methyl-2,6-cyclohexane diisocyanate. Preferably, 4,4'-, 2,4'- or 2,2'-methylenebis(cyclohexylisocyanate) or a mixture thereof (H₁₂MDI), and 1,3- or 1,4-bis(isocyanatomethyl)cyclohexane or a mixture thereof (H₆XDI) are used, more preferably, 4,4'-methylenebis(cyclohexylisocyanate) and 1,3-bis(isocyanatomethyl)cyclohexane are used, further preferably, 4,4'-methylenebis(cyclohexylisocyanate) is used.

Examples of the aromatic polyisocyanate include aromatic diisocyanate. Examples of the aromatic polyisocyanate include 4,4'-, 2,4'- or 2,2'-diphenylmethane diisocyanate or a mixture thereof (MDI), 2,4- or 2,6-tolylene diisocyanate or a mixture thereof (TDI), 4,4'-toluidine diisocyanate (TODI), 1,5-naphthalene diisocyanate (NDI), m- or p-phenylene diisocyanate or a mixture thereof, 4,4'-diphenyl diisocyanate, and 4,4'-diphenylether diisocyanate.

Examples of the araliphatic polyisocyanate include araliphatic diisocyanate. Examples of the araliphatic diisocyanate include 1,3-, or 1,4-bis(isocyanatomethyl)benzene (also known as 1,3-, or 1,4-xylylene diisocyanate) or a mixture thereof (XDI), 1,3- or 1,4-tetramethylxylylene diisocyanate or a mixture thereof (TMXDI), and ω,ω'-diisocyanate-1,4-diethylbenzene.

The polyisocyanate derivative having a ring structure is a derivative of the polyisocyanate monomer having a ring structure, and examples thereof include multimers (e.g., dimers, trimers (e.g., isocyanurate-modified products, iminooxadiazinedione-modified products), pentamers, heptamers, etc.) of the polyisocyanate monomer having a ring structure, allophanate-modified products (e.g., an allophanate-modified product produced by reaction of the above-described polyisocyanate monomer having a ring structure with monohydric alcohol or dihydric alcohol, etc.), polyol-modified products (e.g., a polyol-modified product (alcohol adduct) produced by reaction of the above-described polyisocyanate monomer having a ring structure with trihydric alcohol (e.g., trimethylolpropane, etc.), etc.), biuret-modified products (e.g., a biuret-modified product produced by reaction of the above-described polyisocyanate monomer having a ring structure with water or amines, etc.), urea-modified products (e.g., a urea-modified product produced by reaction of the above-described polyisocyanate monomer having a ring structure with diamine, etc.), oxadiazinetrione-modified products (e.g., an oxadiazinetrione-modified product produced by reaction of the above-described polyisocyanate monomer having a ring structure with carbon dioxide, etc.), carbodiimide-modified products (e.g., a carbodiimide-modified product produced by decarboxylation condensation reaction of the above-described polyisocyanate monomer having a ring structure, etc.), uretdione-modified products, and uretonimine-modified products.

For the polyisocyanate having a ring structure, preferably, polyisocyanate monomer having a ring structure is used, more preferably, alicyclic polyisocyanate is used.

The polyisocyanates having a ring structure can be used alone or in combination of two or more.

The first polyisocyanate component may contain a polyisocyanate having no ring structure.

Examples of the polyisocyanate having no ring structure include polyisocyanate monomers having no ring structure and polyisocyanate derivatives having no ring structure.

Examples of the polyisocyanate monomer having no ring structure include aliphatic polyisocyanate.

Examples of the aliphatic polyisocyanate include aliphatic diisocyanate. Examples of the aliphatic diisocyanate include ethylene diisocyanate, trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), 1,5-pentamethylene diisocyanate (PDI), 1,6-hexamethylene diisocyanate (HDI), 2,4,4- or 2,2,4-trimethylhexamethylene diisocyanate, 2,6-diisocyanatemethyl caproate, and dodecamethylene diisocyanate.

Examples of the polyisocyanate derivative having no ring structure include the above-described derivatives of the above-described polyisocyanate monomers having no ring structure.

The polyisocyanates having no ring structure can be used alone or in combination of two or more.

A blending ratio of the polyisocyanate having no ring structure relative to 100 parts by mass of the first polyisocyanate component is, for example, 10 parts by mass or less, preferably 5 parts by mass or less.

The polyisocyanate preferably does not contain a polyisocyanate having no ring structure but contains only a polyisocyanate having a ring structure.

The first polyol component preferably contains a macropolyol and an active hydrogen group-containing compound containing a hydrophilic group.

The macropolyol is a compound having two or more hydroxy groups at its molecular end and has a number average molecular weight of 400 or more, preferably 500 or more, and 10000 or less, preferably 5000 or less, more preferably 3000 or less.

The macropolyol has an average functionality of, for example, 2 or more, and for example, 3 or less, preferably 2.

Examples of the macropolyol include polyether polyol, polyester polyol, polycarbonate polyol, polyurethane polyol, epoxy polyol, polyolefin polyol, acrylic polyol, silicone polyol, fluorine polyol, and vinyl monomer modified polyol. Preferably, polyester polyol and polycarbonate polyol are used, more preferably, polyester polyol is used.

Examples of the polyester polyol include a polycondensate of a low molecular weight polyol to be described later and polybasic acid.

For the low molecular weight polyol, preferably, dihydric alcohol is used, more preferably, diol having 2 to 6 carbon atoms is used, further preferably, alkane diol is used, particularly preferably, 1,6-hexanediol and neopentyl glycol are used.

Examples of the polybasic acid include aromatic dibasic acids, alicyclic dibasic acids, and aliphatic dibasic acids.

Examples of the aromatic dibasic acid include aromatic carboxylic acids. Examples of the aromatic carboxylic acid include phthalic acid (orthophthalic acid, isophthalic acid, and terephthalic acid), and trimellitic acid. Preferably, phthalic acid is used, more preferably isophthalic acid is used.

Examples of the alicyclic dibasic acid include alicyclic carboxylic acids. Examples of the alicyclic carboxylic acid include HET acid and 1,2-hexahydrophthalic acid.

Examples of the aliphatic dibasic acid include aliphatic carboxylic acids. Examples of the aliphatic carboxylic acid include oxalic acid, malonic acid, succinic acid, methylsuccinic acid, 2,2-dimethyl succinic acid, 2,3-dimethyl succinic acid, hexylsuccinic acid, glutaric acid, 2-methylglutaric acid, 3-methylglutaric acid, 2,2-dimethylglutaric acid, 3,3-dimethylsuccinic acid, adipic acid, pimelic acid, suberic acid, azelaic acid, and sebacic acid. Preferably, adipic acid and sebacic acid are used.

For the polybasic acid, preferably aliphatic dibasic acid and aromatic dibasic acid are used.

For such polyester polyol, preferably, a polycondensate of 1,6-hexanediol, neopentyl glycol and adipic acid, and a polycondensate of isophthalic acid, sebacic acid, ethylene glycol and neopentyl glycol are used. Further, examples of the polyester polyol include polyester polyol produced by ring-opening polymerization of ε-caprolactone or the like.

For the polyester polyol, a commercially available product can be used. To be specific, TAKELAC U-5620 (polyester polyol that is a polycondensate of adipic acid, 1,6-hexanediol, and neopentyl glycol, manufactured by Mitsui Chemicals Inc.) and TAKELAC U-9025 (polyester polyol that is a polycondensate of isophthalic acid, sebacic acid, ethylene glycol, and neopentyl glycol, manufactured by Mitsui Chemicals Inc.) are used.

Examples of the polycarbonate polyol include a ring-opening polymerization product (crystalline polycarbonate polyol) of ethylene carbonate using a low molecular weight polyol (preferably, dihydric alcohol) to be described later as an initiator, and amorphous polycarbonate polyols obtained by copolymerizing dihydric alcohol having 4 to 6 carbon atoms and a ring-opening polymerization product. For the polycarbonate polyol, a plant-derived polycarbonate polyol derived from a plant-derived raw material such as isosorbide can also be used.

For the polycarbonate polyol, a commercially available product can be used. To be specific, DURANOL T-6002 (polycarbonate diol, manufactured by Asahi Kasei Corporation is used.

The macropolyols can be used alone or in combination of two or more.

A blending ratio of the macropolyol relative to 100 parts by mass of a total amount of the first polyol component is, for example, 60 parts by mass or more, preferably 70 parts by mass or more, and for example, 96 parts by mass or less, preferably 90 parts by mass or less, more preferably 80 parts by mass or less.

The active hydrogen group-containing compound containing a hydrophilic group is a compound containing a hydrophilic group and two or more active hydrogen groups. Examples of the active hydrogen group include a hydroxy group and an amino group.

Examples of the hydrophilic group include a nonionic group and an ionic group. To be more specific, examples of the active hydrogen group-containing compound containing a hydrophilic group include an active hydrogen group-containing compound containing a nonionic group, and an active hydrogen group-containing compound containing an ionic group.

The active hydrogen group-containing compound containing a nonionic group is a compound containing a combination of at least one nonionic group and two or more active hydrogen groups. Examples of the nonionic group include a polyoxyethylene group. Examples of the active hydrogen group-containing compound containing a nonionic group include polyoxyethylene glycol, one-end-terminated polyoxyethylene glycol, and polyols containing polyoxyethylene side chain.

Examples of the active hydrogen group-containing compound containing an ionic group include an active hydrogen group-containing compound containing an anionic group, and an active hydrogen group-containing compound containing a cationic group.

The active hydrogen group-containing compound containing an anionic group is a compound containing a combination of at least one anionic group and two or more active hydrogen groups. Examples of the anionic group include a carboxy group (carboxylic acid group) and a sulfo group (sulfonic acid group), and preferably, a carboxy group is used. In the active hydrogen group-containing compound containing an anionic group, examples of the active hydrogen group include a hydroxy group and an amino group. For the active hydrogen group-containing compound containing an anionic group, preferably, a compound containing a combination of a carboxy group, and a hydroxy group and/or an amino group is used. For the active hydrogen group-containing compound containing an anionic group, more preferably, an organic compound containing a combination of a carboxy group and two hydroxy groups is used.

Examples of the organic compound containing a combination of a carboxy group and two hydroxy groups include carboxy group-containing polyols. Examples of the carboxy group-containing polyol include polyhydroxyalkanoic acids. Examples of the polyhydroxyalkanoic acid include 2,2-dimethylolacetic acid, 2,2-dimethylollactic acid, 2,2-dimethylolpropionic acid also known as: dimethylolpropionic acid), 2,2-dimethylolbutanoic acid, 2,2-dimethylolbutyric acid, and 2,2-dimethylol valeric acid, and preferably, 2,2-dimethylolpropionic acid is used.

The active hydrogen group-containing compound containing a cationic group is a compound containing a combination of at least one cationic group and two or more active hydrogen groups. Examples of the cationic group include tertiary amino groups (tertiary amine capable of forming a tertiary ammonium salt). In the active hydrogen group-containing compound containing a cationic group, examples of the active hydrogen group include a hydroxy group and an amino group, and preferably, a hydroxy group is used. That is, for the active hydrogen group-containing compound containing a cationic group, preferably, an organic compound containing a combination of a tertiary amino group and two hydroxy groups is used.

Examples of the organic compound containing a combination of a tertiary amino group and two hydroxy groups include N-alkyl dialkanolamine. Examples of the N-alkyl dialkanolamine include N-methyl diethanolamine, N-propyl diethanolamine, N-butyl diethanolamine, and N-methyl dipropanolamine, and preferably, N-methyl diethanolamine is used.

For the active hydrogen group-containing compound containing a hydrophilic group, preferably, an active hydrogen group-containing compound containing an ionic group is used, more preferably, an active hydrogen group-containing compound containing an anionic group is used.

The active hydrogen group-containing compounds containing a hydrophilic group can be used alone or in combination of two or more.

A blending ratio of the active hydrogen group-containing compound containing a hydrophilic group relative to 100 parts by mass of the total amount of the first polyol component is, for example, 1 part by mass or more, preferably 5 parts by mass or more, more preferably 10 parts by mass or more, and for example, 30 parts by mass or less, preferably 20 parts by mass or less.

The first polyol component may contain a low molecular weight polyol (low molecular weight polyol excluding the active hydrogen group-containing compound containing a hydrophilic group).

Examples of the low molecular weight polyol include diol having 2 to 6 carbon atoms, and other low molecular weight polyols (excluding diol having 2 to 6 carbon atoms).

The diol having 2 to 6 carbon atoms is a compound having a number average molecular weight of 40 or more and less than 400, preferably 300 or less, two hydroxy groups, and 2 to 6 carbon atoms. Examples thereof include alkane diol having 2 to 6 carbon atoms (alkylene glycol having 2 to 6 carbon atoms), ether diol having 2 to 6 carbon atoms, and alkene diol having 2 to 6 carbon atoms.

Examples of the alkane diol having 2 to 6 carbon atoms include ethylene glycol, propylene glycol (1,2- or 1,3-propane diol or a mixture thereof), butylene glycol (1,2-, 1,3-, or 1,4-butanediol or a mixture thereof), 1,5-pentanediol, 1,6-hexanediol, neopentyl glycol, 3-methyl-1,5-pentanediol, and 1,3- or 1,4-cyclohexanediol.

Examples of the ether diol having 2 to 6 carbon atoms include diethylene glycol, triethylene glycol, and dipropylene glycol, and preferably, triethylene glycol is used.

Examples of the alkene diol having 2 to 6 carbon atoms include 1,4-dihydroxy-2-butene.

For the diol having 2 to 6 carbon atoms, preferably, ether diol having 2 to 6 carbon atoms is used.

These diols having 2 to 6 carbon atoms can be used alone or in combination of two or more.

A blending ratio of the diol having 2 to 6 carbon atoms relative to 100 parts by mass of the total amount of the first polyol component is, for example, 1 part by mass or more, preferably 5 parts by mass or more, more preferably 10 parts by mass or more, and for example, 30 parts by mass or less, preferably 20 parts by mass or less.

Other low molecular weight polyols are a compound having a number average molecular weight of 40 or more and less than 400, preferably 300 or less, and two or more hydroxy groups in one molecule, and examples thereof include diol having 7 or more carbon atoms (dihydric alcohol) and a low molecular weight polyol having a functionality of three or more.

Diol having 7 or more carbon atoms (dihydric alcohol) is a compound having a number average molecular weight of 40 or more and less than 400, preferably 300 or less, two hydroxy groups in one molecule, and 7 or more carbon atoms. Examples thereof include alkane-1,2-diol having 7 to 20 carbon atoms, 2,6-dimethyl-1-octene-3,8-diol, 1,3- or 1,4-cyclohexanedimethanol, a mixture thereof, hydrogenated bisphenol A, and bisphenol A.

Examples of the diol having 7 or more carbon atoms (dihydric alcohol) also include dihydric polyalkylene oxide having a number average molecular weight of less than 400, preferably 300 or less. Such polyalkylene oxide can be produced as polyethylene glycol (polyoxyethyleneetherglycol), polypropylene glycol (polyoxypropyleneetherglycol), and polyethylene polypropylene glycol (random or block copolymer) by addition reaction of alkylene oxide such as ethylene oxide and/or propyleneoxide with the above-described dihydric alcohol as an initiator. Examples thereof also include polytetramethylene ether glycol having a number average molecular weight of less than 400, preferably 300 or less, produced by ring-opening polymerization of tetrahydrofuran.

The low molecular weight polyol having a functionality of three or more is a compound having a number average molecular weight of 40 or more and less than 400, preferably 300 or less, and three or more hydroxy groups in one molecule. Examples thereof include trihydric alcohol (low molecular weight triol), tetrahydric alcohol, pentahydric alcohol, hexahydric alcohol, heptahydric alcohol, and octahydric alcohol. Examples of the trihydric alcohol include glycerin, 2-methyl-2-hydroxymethyl-1,3-propanediol, 2,4-dihydroxy-3-hydroxymethylpentane, 1,2,6-hexanetriol, trimethylolpropane, and 2,2-bis(hydroxymethyl)-3-butanol. Examples of the tetrahydric alcohol include tetramethylolmethane (pentaerythritol) and diglycerin. Examples of the pentahydric alcohol include xylitol. Examples of the hexahydric alcohol include sorbitol, mannitol, allitol, iditol, darcitol, altritol, inositol, and dipentaerythritol. Examples of the heptahydric alcohol include perseitol. Examples of the octahydric alcohol include sucrose.

Examples of the low molecular weight polyol having a functionality of three or more also include polyalkylene oxide having a functionality of three or more and a number average molecular weight of 40 or more and less than 400, preferably 300 or less.
Such polyalkylene oxide can be produced as polyethylenepolyol, polypropylenepolyol, and polyethylenepolypropylenepolyol (random or block copolymer) by addition reaction of alkylene oxide such as ethylene oxide and/or propyleneoxide with the above-described low molecular weight polyol having a functionality of three or more or a known polyamine as an initiator.

Other low molecular weight polyols can be used alone or in combination of two or more.

When an active hydrogen group-containing compound containing an anionic group is used as the active hydrogen group-containing compound containing a hydrophilic group, the first polyol component preferably contains a macropolyol, an active hydrogen group-containing compound containing a hydrophilic group, and a low molecular weight polyol, and more preferably consists of a macropolyol, an active hydrogen group-containing compound containing a hydrophilic group, and a low molecular weight polyol. When an active hydrogen group-containing compound containing a cationic group is used as the active hydrogen group-containing compound containing a hydrophilic group, the first polyol component preferably contains a macropolyol and an active hydrogen group-containing compound containing a hydrophilic group, and more preferably consists of a macropolyol and an active hydrogen group-containing compound containing a hydrophilic group.

In the reaction of the first polyisocyanate component with the first polyol component, the above-described components are allowed to react by a known polymerization method such as bulk polymerization and solution polymerization, preferably, by solution polymerization with which adjustment of reactivity and viscosity is easier.

In this reaction, when chain extension to be described later is performed, the equivalent ratio (isocyanate group/hydroxy group) of the isocyanate group in the first polyisocyanate component relative to the active hydrogen group (hydroxy group and/or amino group) in the first polyol component exceeds 1, and is, for example, 1.2 or more, preferably 1.3 or more, and for example, 3.0 or less, preferably 2.5 or less. The terminal functional group of the reaction product obtained in this case is an isocyanate group. That is, an isocyanate group-terminated prepolymer is obtained.

On the other hand, when chain extension to be described later is not performed, the above-described equivalent ratio (isocyanate group/hydroxy group) is, for example, 0.9 or more, and for example, 1.1 or less. The terminal functional group of the reaction product obtained in this case is an isocyanate group or a hydroxy group.

In solution polymerization, for example, the above-described components are blended in an organic solvent (solvent) under a nitrogen atmosphere, and allowed to react.

The reaction conditions are as follows: the reaction temperature is, for example, 20°C or more, and for example, 80°C or less; and the reaction time is 1 hour or more, and for example, 20 hours or less.

Examples of the organic solvent include those organic solvents that are inactive to isocyanate groups, and are highly hydrophilic, such as, for example, acetone, methyl ethyl ketone, ethyl acetate, tetrahydrofuran, acetonitrile, and N-methylpyrrolidone.

In the above-described polymerization, for example, a reaction catalyst (e.g., amine, tin, and lead-based) may be added as necessary.

In the above-described reaction, unreacted first polyisocyanate component and/or unreacted first polyol component can be removed by a known method such as distillation or extraction.

In this manner, a reaction product of the first polyisocyanate component and the first polyol component is produced.

When the first polyisocyanate component is allowed to react with the first polyol component by solution polymerization, the reaction product is obtained as a reaction solution containing the reaction product and the organic solvent.

When an ionic group is contained in the reaction product, preferably, a neutralizing agent is added for neutralization to form a salt of the ionic group.

For the neutralizing agent, when the ionic group is an anionic group, a conventional base (e.g., triethylamine) is used. When the ionic group is a cationic group, a conventional base (e.g., acetic acid) is used.

The neutralizing agent is added, per 1 equivalent of anionic group (or per 1 equivalent of cationic group), in an amount of 0.4 equivalent or more, preferably 0.6 equivalent or more, and for example, 1.2 equivalent or less, preferably 1 equivalent or less.

The neutralizing agents can be used alone or in combination of two or more.

The chain of such a reaction product can be extended with a chain extender. In detail, when an active hydrogen group-containing compound containing an anionic group is used as the active hydrogen group-containing compound containing a hydrophilic group, the chain of the reaction product is preferably extended. On the other hand, when an active hydrogen group-containing compound containing a cationic group is used as the active hydrogen group-containing compound containing a hydrophilic group, the above-described reaction product (no chain-extended reaction product) is used as is, preferably without extending the chain thereof.

When the chain of the reaction product is extended with a chain extender, the reaction product is a prepolymer. To extend the chain of the reaction product (prepolymer) with a chain extender, the reaction product (prepolymer) is allowed to react with the chain extender, for example, in water, to produce polyurethane resin (polyurethane dispersion).

Examples of the chain extender include the above-described low molecular weight polyols and amino group-containing compounds.

Examples of the amino group-containing compound include amino group-containing compounds such as aromatic polyamine, araliphatic polyamine, alicyclic polyamine, aliphatic polyamine, aminoalcohol, polyoxyethylene group-containing polyamine, alkoxysilyl compound having a primary amino group or a primary amino group and a secondary amino group, hydrazine or derivatives thereof.

Examples of the aromatic polyamine include 4,4'-diphenylmethanediamine and tolylenediamine.

Examples of the araliphatic polyamine include 1,3- or 1,4-xylylene diamine, or mixtures thereof.

Examples of the alicyclic polyamine include 3-aminomethyl-3,5,5-trimethylcyclohexylamine (also known as: isophoronediamine), 4,4'-dicyclohexylmethanediamine, 2,5(2,6)-bis(aminomethyl) bicyclo[2.2.1]heptane, 1,4-cyclohexanediamine, 1-amino-3-aminomethyl-3,5,5-trimethylcyclohexane, bis-(4-aminocyclohexyl) methane, diaminocyclohexane, 3,9-bis(3-aminopropyl)-2,4,8,10-tetraoxaspiro[5,5]undecane, 1,3- and 1,4-bis(aminomethyl) cyclohexane and mixtures thereof.

Examples of the aliphatic polyamine include ethylenediamine, propylene diamine, 1,3-propanediamine, 1,4-butanediamine, 1,5-pentanediamine, 1,6-hexamethylenediamine, diethylenetriamine, triethylenetetramine, tetraethylenepentamine, 1,2-diaminoethane, 1,2-diaminopropane, and 1,3-diaminopentane, and preferably, ethylenediamine is used.

Examples of the aminoalcohol include 2-((2-aminoethyl) amino) ethanol (also known as: N-(2-aminoethyl) ethanolamine), and 2-((2-aminoethyl) amino)-1-methylpropanol (also known as: N-(2-aminoethyl) isopropanolamine), and preferably, 2-((2-aminoethyl) amino) ethanol (also known as: N-(2-aminoethyl) ethanolamine) is used.

Examples of the polyoxyethylene group-containing polyamine include polyoxyalkylene etherdiamine such as polyoxyethylene etherdiamine. To be more specific, examples thereof include PEG#1000 diamine manufactured by NOF Corporation, Jeffamine ED-2003, EDR-148, and XTJ-512 manufactured by Huntsman Inc.

Examples of the alkoxysilyl compound having a primary amino group, or a primary amino group and a secondary amino group include an alkoxysilyl compound having a primary amino group, and an alkoxysilyl compound having a primary amino group and a secondary amino group.
Examples of the alkoxysilyl compound having a primary amino group include γ-aminopropyltrimethoxysilane, γ-aminopropyltriethoxysilane, and N-phenyl-γ-aminopropyltrimethoxysilane. Examples of the alkoxysilyl compound having a primary amino group and a secondary amino group include N-β (aminoethyl) γ-aminopropyltrimethoxysilane (also known as: N-2-(aminoethyl)-3-aminopropyltrimethoxysilane), N-β (aminoethyl) γ-aminopropyltriethoxysilane (also known as: N-2-(aminoethyl)-3-aminopropyltriethoxysilane), N-β (aminoethyl) γ-aminopropylmethyldimethoxysilane (also known as: N-2-(aminoethyl)-3-aminopropylmethyldimethoxysilane), and N-β (aminoethyl) γ-aminopropylmethyldiethoxysilane (also known as: N-2-(aminoethyl)-3-aminopropylmethyldiethoxysilane). For the alkoxysilyl compound having a primary amino group, or a primary amino group and a secondary amino group, preferably, an alkoxysilyl compound having a primary amino group and a secondary amino group is used, more preferably, N-β(aminoethyl)-γ-aminopropyltrimethoxysilane (also known as: N-2-(aminoethyl)-3-aminopropyltrimethoxysilane) is used.

Examples of the hydrazine or derivatives thereof include hydrazine (including hydrate), succinic acid dihydrazide, and adipic acid dihydrazide.

For the chain extender, preferably, an amino group-containing compound is used, more preferably, aliphatic polyamine, aminoalcohol, and an alkoxysilyl compound having a primary amino group, or a primary amino group and a secondary amino group are used.

The chain extenders can be used alone or in combination of two or more. Preferably, aminoalcohol, and an alkoxysilyl compound having a primary amino group or a primary amino group and a secondary amino group are used in combination, and aliphatic polyamine is used alone.

To allow the reaction product to react with the chain extender in water, for example, first, the reaction product (prepolymer) is added to water, thereby dispersing the reaction product (prepolymer) in water, and then, the chain extender is added thereto, thereby extending the chain of the reaction product (prepolymer) with the chain extender.

To disperse the reaction product (prepolymer) in water, the reaction product (prepolymer) is added to water under stirring at a ratio of 50 to 1000 parts by mass of water relative to 100 parts by mass of the reaction product (prepolymer).

Thereafter, the chain extender is dropped in the water in which the reaction product (prepolymer) is dispersed while stirring, so that the equivalent ratio (active hydrogen group/isocyanate group) of the active hydrogen group (amino group and hydroxy group) of the chain extender relative to the isocyanate group of the reaction product (prepolymer) is, for example, 0.6 to 1.2.

The chain extender can be dropped as, for example, an aqueous solution, and after completion of the dropping, with further stirring, the reaction is completed at, for example, normal temperature. The reaction time till the completion of the reaction is, for example, 0.1 hours or more, and for example, 10 hours or less.

In contrast to the above-described method, water can be added in the reaction product (prepolymer) to disperse the reaction product (prepolymer) in water, and then a chain extender is added to the mixture to extend the chain of the reaction product (prepolymer) with the chain extender.

In this method, as necessary, the organic solvent and water can be removed, and furthermore, water can be added to adjust the solid content concentration.

In this manner, the chain of the reaction product (prepolymer) is extended with the chain extender. Therefore, polyurethane resin prepared as an aqueous dispersion (polyurethane dispersion) is produced.

The polyurethane dispersion has a pH of, for example, 6 or more, preferably 7 or more, and for example, 10 or less, preferably 9 or less.

The polyurethane dispersion has a viscosity at 25°C of, for example, 20 mPa s or more, preferably 30 mPa s or more, and for example, 100 mPa s or less, preferably 50 mPa s or less.

A method for measuring the viscosity is described in detail in Example to be described later (the same applies to the following).

The polyurethane dispersion has an average particle size of, for example, 20 nm or more, preferably 30 nm or more, and for example, 50 nm or less.

A method for measuring the average particle size is described in detail in Example to be described later (the same applies to the following).

On the other hand, as described above, when an active hydrogen group-containing compound containing a cationic group is used as the active hydrogen group-containing compound containing a hydrophilic group, the above-described reaction product (no chain-extended reaction product) is used as is, preferably without extending the chain thereof. In such a case, the reaction product (no chain-extended reaction product) is dispersed in water, to thereby producing polyurethane resin prepared as an aqueous dispersion (polyurethane dispersion).

The polyurethane dispersion has a pH of, for example, 4 or more, preferably 5 or more, and for example, 8 or less, preferably 7 or less.

The polyurethane dispersion has a viscosity at 25°C of, for example, 5 mPa·s or more, preferably 10 mPa·s or more, and for example, 80 mPa·s or less, preferably 50 mPa·s or less, more preferably 30 mPa·s or less.

The polyurethane dispersion has an average particle size of, for example, 40 nm or more, preferably 50 nm or more, and for example, 70 nm or less.

The polyurethane dispersion has a solid content concentration of, for example, 10% by mass or more, preferably 20% by mass or more, and for example, 50% by mass or less, preferably 40% by mass or less.

### [Inorganic particles]

Inorganic particles are blended to improve heat resistance of a heat-resistant layer (described later).

Examples of the inorganic particles include metal oxide particles and carbonate particles. Examples of the metal oxide particles include silica particles, titanium oxide particles, and aluminum oxide particles. Examples of the carbonate particles include calcium carbonate particles and magnesium carbonate particles.

As the inorganic particles, for example, the above-described inorganic particles in colloidal form (e.g., colloidal metal oxide particles) can also be used. To be specific, colloidal silica particles (colloidal silica) and colloidal aluminum oxide particles (alumina sol) are used.

For the inorganic particles, preferably, metal oxide particles are used, more preferably, silica particles and aluminum oxide particles are used, further preferably, colloidal silica particles (colloidal silica) and colloidal aluminum oxide particles (alumina sol) are used, particularly preferably, colloidal silica is used in view of further improving the heat resistance of the heat-resistant layer (described later).

The inorganic particles have an average particle size of 5 nm or more, preferably 7 nm or more, more preferably 10 nm or more in view of dispersibility in the polyurethane dispersion, and 1000 nm or less, preferably 170 nm or less, more preferably 100 nm or less in view of improving the appearance of the heat-resistant layer (described later), further preferably 70 nm or less, particularly preferably 50 nm or less, most preferably 30 nm or less in view of storage stability of the aqueous polyurethane composition to be described later.

The above-described average particle size can be measured using a Fiber-Optics Particle Analyzer FPAR-1000 (manufactured by Otsuka Electronics Co., Ltd.).

### [Preparation of aqueous polyurethane composition]

The aqueous polyurethane composition is produced by mixing polyurethane resin (aqueous dispersion of polyurethane resin) and inorganic particles.

A blending ratio of the polyurethane resin (solid content) relative to the total amount of the polyurethane resin (solid content) and the above-described inorganic particles is 5% by mass or more, and 95% by mass or less, preferably 80% by mass or less, more preferably 65% by mass or less, further preferably 45% by mass or less.

A blending ratio of the inorganic particles relative to the total amount of the polyurethane resin (solid content) and the above-described inorganic particles is 5% by mass or more, preferably 20% by mass or more, and in view of suppressing blocking when laminates (first laminate and second laminate) are produced and are then wound and processed, more preferably 35% by mass or more, further preferably 55% by mass or more, and 95% by mass or less.

When the blending ratio of the polyurethane resin (solid content) and the blending ratio of the inorganic particles are within the above-described ranges, the heat resistance of the heat-resistant layer (described later) can be further improved. As a result, when one surface of a substrate layer (described later) is heat-sealed, heat sealing of the other surface of the substrate layer (described later) can be suppressed.

To impart wettability relative to a polyolefin-based first film 3, and for dilution, for example, a water-soluble organic solvent and a wetting agent (e.g., a modified polysiloxane copolymer) can be added to the aqueous polyurethane composition.

Examples of the water-soluble organic solvent include alcohols and ketones. Examples of the alcohols include methanol, ethanol, and 2-propanol. Examples of the ketones include acetone and methyl ethyl ketone.

The water-soluble organic solvents can be used alone or in combination of two or more.

Furthermore, as necessary, various additives can be blended in the aqueous polyurethane composition. Examples of the additive include stabilizers (e.g., antioxidants, heat stabilizers, and ultraviolet ray absorbents), plasticizers, antistatic agents, lubricants, antiblocking agents, surfactants, dispersion stabilizers, coloring agents (e.g., pigments and dyes), and crystal nucleating agents.

The blending ratio of the additives is not particularly limited, and is appropriately set in accordance with its purpose and application.

### 2. Heat-resistant coating agent

The heat-resistant coating agent contains the above-described aqueous polyurethane composition. Therefore, when one surface of the substrate layer (described later) is heat-sealed, heat sealing of the other surface of the substrate layer (described later) can be suppressed.

### 3. First laminate

With reference to FIG. 1, one embodiment of the first laminate of the present invention is described.

In FIG. 1, the up-down direction on the plane of the sheet is referred to as an up-down direction (thickness direction). The upper side on the plane of the sheet is referred to as an upper side (one side in the thickness direction). The lower side on the plane of the sheet is referred to as a lower side (the other side in the thickness direction). The right-left direction and the depth direction on the plane of the sheet is a plane direction orthogonal to the up-down direction. To be specific, the directions are in conformity with direction arrows of each figure.

A first laminate 1 sequentially includes a heat-resistant layer 2, the polyolefin-based first film 3, an adhesive layer 4, and a polyolefin-based second film 5 toward one side in the thickness direction. Specifically, a first laminate 1 includes a heat-resistant layer 2, the polyolefin-based first film 3 disposed directly on the upper surface (one surface in the thickness direction) of the heat-resistant layer 2, an adhesive layer 4 disposed directly on the upper surface (one surface in the thickness direction) of the polyolefin-based first film 3, and a polyolefin-based second film 5 disposed directly on the upper surface (one surface in the thickness direction) of the adhesive layer 4.

The first laminate 1 has a thickness of, for example, 45 µm or more, preferably 60 µm or more, and for example, 150 µm or less, preferably 120 µm or less.

### <Heat-resistant layer>

The heat-resistant layer 2 extends along a plane direction (a direction orthogonal to the thickness direction) and has a sheet shape having flat surface and back surface.

When the polyolefin-based second film 5 is heat-sealed, the heat-resistant layer 2 suppresses heat-sealing of the polyolefin-based first film 3.

The heat-resistant layer 2 is a dried product of the aqueous polyurethane composition.

As the details are described later, the heat-resistant layer 2 is produced by applying and drying the aqueous polyurethane composition on the other surface in the thickness direction of the polyolefin-based first film 3.

The heat-resistant layer 2 has a mass per unit area of, for example, 0.1 g/m² or more in view of improving the appearance of the heat-resistant layer 2, 0.2 g/m² or more, preferably 0.4 g/m² or more, and for example, 3.7 g/m² or less in view of further improving the appearance of the heat-resistant layer 2, preferably 3.3 g/m² or less, more preferably 2.5 g/m² or less, further preferably 1.5 g/m² or less, particularly preferably 0.8 g/m² or less in view of further improving the appearance of the heat-resistant layer 2.

The heat-resistant layer 2 has a hardness (Martens hardness) of, for example, 0.35 N/mm² or more, preferably 0.4 N/mm² or more in view of suppressing blocking when the first laminate 1 to be described later is produced and is then wound and processed, and for example, 0.6 N/mm² or less, preferably 0.5 N/mm² or less in view of slipperiness of the surface of the first laminate 1.

The Martens hardness of the heat-resistant layer 2 is obtained by measuring Martens hardness (HMs, N/mm²) on the surface of the heat-resistant layer with a coating weight of 1.5 g using an ultra-micro hardness tester. In the measurement, a test force is 0.5 mN, a set depth is 1.0 µm, and a load speed is 3.0 mN/sec.

### <Polyolefin-based first film>

The polyolefin-based first film 3 extends along the plane direction (the direction orthogonal to the thickness direction) and has a sheet shape having flat surface and back surface.

The polyolefin-based first film 3 contains, as its material, at least one selected from the group consisting of, for example, polyethylene, polypropylene, an ethylene-based copolymer, and a propylene-based copolymer.

Examples of the film using polyethylene as its material include a low-density polyethylene film (LDPE) and a straight chain low-density polyethylene film (LLDPE).

Examples of the film using polypropylene as its material include an oriented polypropylene film (CPP film), a uniaxially oriented polypropylene film, and a biaxially oriented polypropylene film (OPP film).

Examples of the film using ethylene-based copolymer as its material include an ethylene-α-olefin copolymer film. In the ethylene-α-olefin copolymer film, the α-olefin is an α-olefin having 3 or more carbon atoms, and to be specific, propylene, 1-butene, 1-pentene, 1-hexene, 4-methyl-1-pentene, 1-octene, 1-decene, 1-dodecene, 1-tetradecene, 1-hexadecene, 1-octadecene, and 1-eicosene are used.

Examples of the film using propylene-based copolymer as its material include a propylene-α-olefin copolymer film. In the propylene-α-olefin copolymer film, the α-olefin is an α-olefin having 4 or more carbon atoms, and to be specific, 1 -butene, 1-pentene, 1-hexene, 4-methyl-1-pentene, 1-octene, 1-decene, 1-dodecene, 1-tetradecene, 1-hexadecene, 1-octadecene, and 1-eicosene are used.

The above-described materials can be used alone or in combination of two or more. Preferably, the material is selected from one selected from the group consisting of polyethylene, polypropylene, an ethylene-based copolymer, and a propylene-based copolymer, more preferably, polyethylene or polypropylene is selected.

The polyolefin-based first film 3 may be subjected to anchor coat treatment with an anchor coat agent (e.g., a mixture of trimethylolpropane modified product of xylylene diisocyanate and ethyl acetate).

The polyolefin-based first film 3 has a thickness of, for example, 10 µm or more, preferably 20 µm or more, in view of ease of handling, and for example, 150 µm or less, preferably 100 µm or less, in view of improving heat sealability of the first laminate 1.

### <Adhesive layer>

The adhesive layer 4 extends along the plane direction (the direction orthogonal to the thickness direction) and has a sheet shape having flat surface and back surface.

The adhesive layer 4 bonds the polyolefin-based first film 3 to the polyolefin-based second film 5.

The adhesive layer 4 is formed from an adhesive.

The adhesive is not particularly limited, and examples thereof include a known two-component curing urethane adhesive.

For the adhesive, a commercially available product can be used, and a mixture of TAKELAC A-969V (manufactured by Mitsui Chemicals, Inc.) and TAKENATE A-5 (manufactured by Mitsui Chemicals, Inc.) or the like is used.

As the details are described later, the adhesive layer 4 is produced by applying and drying the adhesive on one surface in the thickness direction of the polyolefin-based first film 3.

The adhesive layer 4 has a mass per unit area of, for example, 1.0 g/m² or more, preferably 2.0 g/m² or more, and for example, 5.0 g/m² or less, preferably 4.0 g/m² or less.

### <Polyolefin-based second film>

The polyolefin-based second film 5 extends along the plane direction (the direction orthogonal to the thickness direction) and has a sheet shape having flat surface and back surface.

Examples of the polyolefin-based second film 5 include the same as the above-described polyolefin-based first film 3.

Preferably, in view of a single material, the polyolefin-based first film 3 and the polyolefin-based second film 5 are both identical.

To be specific, the polyolefin-based first film 3 and the polyolefin-based second film 5 are both low-density polyethylene films (LDPE), or both are straight chain low-density polyethylene films (LLDPE), or both are biaxially oriented polypropylene films (OPP film), or both are cast (unoriented) polypropylene films (CPP film).

The polyolefin-based second film 5 may be subjected to anchor coat treatment with the above-described anchor coat agent.

The polyolefin-based second film 5 has a thickness of, for example, 10 µm or more, preferably 20 µm or more, in view of ease of handling, and for example, 150 µm or less, preferably 100 µm or less, in view of improving heat sealability of the first laminate 1.

### <Method for producing first laminate>

With reference to FIGS. 2A to 2D, one embodiment of the method for producing the first laminate 1 is described.

The method for producing the first laminate 1 includes a first step of preparing the polyolefin-based first film 3; a second step of disposing (laminating) the heat-resistant layer 2 by applying the aqueous polyurethane composition on the other surface in the thickness direction of the polyolefin-based first film 3 and drying the applied composition; a third step of disposing (laminating) the adhesive layer 4 on one surface in the thickness direction of the polyolefin-based first film 3, and a fourth step of disposing (laminating) the polyolefin-based second film 5 on one surface in the thickness direction of the adhesive layer 4.

### [First step]

In the first step, as shown in FIG. 2A, the polyolefin-based first film 3 is prepared.

### [Second step]

In the second step, as shown in FIG. 2B, the heat-resistant layer 2 is disposed (laminated) by applying the aqueous polyurethane composition to the other surface in the thickness direction of the polyolefin-based first film 3 and drying the applied composition.

To dispose (laminate) the heat-resistant layer 2 on the other surface in the thickness direction of the polyolefin-based first film 3, the other surface of the polyolefin-based first film 3 is preferably subjected to surface treatment.

Examples of the surface treatment include corona treatment, flame treatment, plasma treatment, and ultraviolet treatment. That is, preferably, the other surface in the thickness direction of the polyolefin-based first film 3 is subjected to at least one surface treatment selected from the group consisting of corona treatment, flame treatment, plasma treatment, and ultraviolet treatment.

Thus, the wettability of the polyolefin-based first film 3 can be improved.

Next, the aqueous polyurethane composition is applied entirely to the other surface in the thickness direction of the polyolefin-based first film 3 and then dried.

As the application method, a known coating method (e.g., bar coating method, curtain coating method, roll coating method, and blade coating method) is used.

The drying conditions are as follows: the drying temperature is, for example, 40°C or more, preferably 50°C or more, and for example, 80°C or less. And, the drying time is, for example, 10 seconds or more, preferably 20 seconds or more, and for example, 120 seconds or less.

In this manner, the heat-resistant layer 2 is disposed (laminated) on the other surface in the thickness direction of the polyolefin-based first film 3.

### [Third step]

In the third step, as shown in FIG. 2C, the adhesive layer 4 is disposed (laminated) on one surface in the thickness direction of the polyolefin-based first film 3.

To dispose (laminate) the adhesive layer 4 on one surface in the thickness direction of the polyolefin-based first film 3, an adhesive is applied entirely to one surface in the thickness direction of the polyolefin-based first film 3 and then dried.

The application method is the same as that for the above-described heat-resistant layer 2.

The drying conditions are as follows: the drying temperature is, for example, 30°C or more, and for example, 80°C or less. And, the drying time is, for example, 1 minute or more, and for example, 5 minutes or less.

In this manner, the adhesive layer 4 is disposed (laminated) on one surface in the thickness direction of the polyolefin-based first film 3.

### [Fourth step]

In the fourth step, as shown in FIG. 2D, the polyolefin-based second film 5 is disposed (laminated) on one surface in the thickness direction of the adhesive layer 4.

The polyolefin-based second film 5 is disposed and then aged as necessary.

The aging temperature is, for example, 20°C or more, and, for example, 50°C or less. The aging time is, for example, 1 day or more, and for example, 4 days or less.

In this manner, the polyolefin-based first film 3 and the polyolefin-based second film 5 are bonded with the adhesive layer 4 interposed therebetween, to thereby produce the first laminate 1.

### 4. Second laminate

With reference to FIG. 3, one embodiment of the second laminate of the present invention is described.

A second laminate 20 sequentially includes a substrate layer 21 and a heat-insulating layer 2 toward one side in the thickness direction.

To be specific, the second laminate 20 includes the substrate layer 21, and the heat-resistant layer 2 disposed directly on the upper surface (one surface in the thickness direction) of the substrate layer 21.

The second laminate 20 has a thickness of, for example, 45 µm or more, preferably 60 µm or more, and for example, 150 µm or less, preferably 120 µm or less.

The substrate layer 21 sequentially includes the polyolefin-based second film 5, the adhesive layer 4, and the polyolefin-based first film 3 toward the thickness direction.

That is, the second laminate 20 sequentially includes the polyolefin-based second film 5, the adhesive layer 4, the polyolefin-based first film 3, and the heat-insulating layer 2 toward one side in the thickness direction.

### <Method for producing second laminate>

With reference to FIGS. 4A and 4B, one embodiment of the method for producing the second laminate 20 is described.

The method for producing the second laminate 20 includes a fifth step of preparing the substrate layer 21; and a sixth step of disposing the heat-resistant layer 2 by applying the aqueous polyurethane composition to one surface in the thickness direction of the substrate layer 21 and drying the applied composition.

### [Fifth step]

In the fifth step, as shown in FIG. 4A, the substrate layer 21 is prepared. To be specific, according to the same procedure as in the above-described third and fourth steps, the adhesive layer 4 and the polyolefin-based second film 5 are disposed sequentially on the other surface in the thickness direction of the polyolefin-based first film 3.

### [Sixth step]

In the sixth step, as shown in FIG. 4B, the heat-resistant layer 2 is disposed by applying the aqueous polyurethane composition to one surface in the thickness direction of the substrate layer 21 and drying the applied composition. To be specific, according to the same procedure as in the above-described second step, the heat-insulating layer 2 is disposed on one surface in the thickness direction of the substrate layer 21 (polyolefin-based first film 3).

In this manner, the second laminate 20 is produced.

### <Function and Effect>

According to the aqueous polyurethane composition, the blending ratio of the polyurethane resin and the blending ratio of the inorganic particles relative to the total amount of the polyurethane resin and the inorganic particles are in a predetermined range. Therefore, when one surface of the substrate layer 21 is heat-sealed, heat sealing of the other surface of the substrate layer 21 can be suppressed. To be specific, in the first laminate 1, when the polyolefin-based second film 5 is heat-sealed, heat sealing of the polyolefin-based first film 3 can be suppressed.

The heat-resistant coating agent contains the aqueous polyurethane composition. Therefore, when one surface of the substrate layer 20 is heat-sealed, heat sealing of the other surface of the substrate layer 20 can be suppressed.

According to the first laminate 1, the heat-resistant layer 2 is provided on the other surface in the thickness direction of the polyolefin-based first film 3, so that when the polyolefin-based second film 5 is heat-sealed, heat-sealing of the polyolefin-based first film 3 can be suppressed.

According to the second laminate 20, the heat-resistant layer 2 is provided on one surface in the thickness direction of the substrate layer 20, so that when the other surface of the substrate layer 21 is heat-sealed, heat-sealing of one surface of the substrate layer 21 can be suppressed.

According to the method for producing the first laminate 1, the heat-resistant layer 2 is disposed by applying the aqueous polyurethane composition to the other surface in the thickness direction of the polyolefin-based first film 3 and drying the applied composition. Therefore, the first laminate 1 can be suitably produced.

According to the method for producing the second laminate 20, the heat-resistant layer 2 is disposed by applying the aqueous polyurethane composition to one surface in the thickness direction of the substrate layer 21 and drying the applied composition. Therefore, the first laminate 1 can be suitably produced.

These first laminate 1 and second laminate 20 can be suitably used for packaging materials for various industrial products, such as confectionery, foodstuffs, daily necessities, pharmaceutical products, and paper products.

In particular, such a first laminate 1 can be suitably used for production of a standing pouch as an example of the bag of the present invention.

### <Standing pouch>

With reference to FIGS. 5A to 5C, one embodiment of the method for producing the standing pouch is described.

A standing pouch 10 is a packaging bag that can contain contents inside and is self-standing.

To produce the standing pouch 10, first, as shown in FIG. 5A, a sheet-like laminate 1 is prepared.

Then, the laminate 1 is folded into a generally W-shape so that the polyolefin-based second films 5 in the laminate 1 are opposed to each other.

Then, as shown in FIG. 5B, opposing polyolefin-based second films 5 in the laminate 1 are brought into contact with each other.

In this manner, the opposing polyolefin-based second film 5 side is inside (contents side) the standing pouch 10 and the heat-resistant layer 2 side (polyolefin-based first film 3 side) is outside the standing pouch 10.

The portion folded in the generally W shape is a bottom portion 11 of the standing pouch 10, and the other side thereof is a mouth portion 12 where the contents are put in (or taken out).

In the bottom portion 11, the polyolefin-based second films 5 are in contact with each other on the inside of the standing pouch 10, and the heat-resistant layers 2 are in contact on the outside of the standing pouch 10.

Then, the inside of the standing pouch 10 (the polyolefin-based second film 5 and the bottom portion 11 (see the dotted portion in FIG. 5B)) is heat-sealed.

At this time, on the outside of the standing pouch 10, the polyolefin-based first films 3 are not heat-sealed to each other because the heat-resistant layers 2 come in contact with each other between the polyolefin-based first films 3. Therefore, as shown in FIG. 5C, the standing pouch 10 can be self-standing by pulling the polyolefin-based first films 3 away from each other at the bottom portion 11.

In this manner, the standing pouch 10 made of the laminate 1 is produced.

Such a standing pouch 10 is made of the laminate 1, so that when the second film is heat-sealed, heat sealing of the polyolefin-based first film 3 can be suppressed.

### <Modifications>

In the modified examples, the same reference numerals are provided for members and steps corresponding to each of those in one embodiment, and their detailed description is omitted. Further, the modified examples can achieve the same function and effect as that of one embodiment unless otherwise specified. Furthermore, one embodiment and the modified examples thereof can be appropriately used in combination.

The laminate 1 can also include a gas barrier layer 6. To be specific, the gas barrier layer 6 can also be provided between the polyolefin-based first film 3 and the adhesive layer 4 (see FIG. 6A), or between the heat-resistant layer 2 and the polyolefin-based first film 3 (see FIG. 6B), or between the adhesive layer 4 and the polyolefin-based second film 5 (see Figure 6C).

Alternatively, the laminate 1 can include a plurality of gas barrier layers 6.

In other words, the laminate 1 includes the gas barrier layer 6 between the polyolefin-based first film 3 and the adhesive layer 4 and/or between the heat-resistant layer 2 and the polyolefin-based first film 3 and/or between the adhesive layer 4 and the polyolefin-based second film 5.

When the laminate 1 includes the gas barrier layer(s) 6, it has excellent gas barrier properties.

The following describes the laminate 1 (see FIG. 6A) provided with the gas barrier layer 6 between the polyolefin-based first film 3 and the adhesive layer 4.

Such a laminate 1 sequentially includes the heat-resistant layer 2, the polyolefin-based first film 3, the gas barrier layer 6, the adhesive layer 4, and the polyolefin-based second film 5 toward one side in the thickness direction.

### [Gas barrier layer]

The gas barrier layer 6 extends along the plane direction (the direction orthogonal to the thickness direction) and has a sheet shape having flat surface and back surface.

The gas barrier layer 6 imparts gas barrier properties to the laminate 1.

The gas barrier layer 6 is formed from a dried product of polyurethane resin which is a reaction product of an isocyanate group-terminated prepolymer and a chain extender, the isocyanate group-terminated prepolymer being a reaction product of a polyisocyanate component including xylylene diisocyanate (hereinafter referred to as second polyisocyanate component), and a polyol component including a diol having 2 to 6 carbon atoms and an active hydrogen group-containing compound containing a hydrophilic group (hereinafter referred to as second polyol component).

The second polyisocyanate component contains xylylene diisocyanate as an essential component.

Examples of the xylylene diisocyanate include 1,2-xylylene diisocyanate (o-XDI), 1,3-xylylene diisocyanate (m-XDI), and 1,4-xylylene diisocyanate (p-XDI) as structural isomers.

For the xylylene diisocyanate, preferably, 1,3-xylylene diisocyanate and 1,4-xylylene diisocyanate are used, more preferably, 1,3-xylylene diisocyanate is used.

Examples of the xylylene diisocyanate include the above-described derivatives thereof.

The xylylene diisocyanates can be used alone or in combination of two or more.

The second polyisocyanate component can contain other polyisocyanates as optional components.

Examples of the other polyisocyanate include the above-described alicyclic polyisocyanates, the above-described aromatic polyisocyanates, the above-described araliphatic polyisocyanates (excluding xylylene diisocyanate), the above-described aliphatic polyisocyanates, and the above-described derivatives thereof, and preferably, alicyclic polyisocyanates are used, more preferably, 4,4'-methylenebis(cyclohexylisocyanate) is used.

A blending ratio of the other polyisocyanate (alicyclic polyisocyanate) relative to 100 parts by mass of the second polyisocyanate component is, for example, 10 parts by mass or more, and for example, 30 parts by mass or less.

The second polyisocyanate component preferably contains xylylene diisocyanate and alicyclic polyisocyanate, more preferably contains xylylene diisocyanate and 4,4'-methylenebis(cyclohexylisocyanate), and further preferably consists of xylylene diisocyanate and 4,4'-methylenebis(cyclohexylisocyanate).

The second polyol component contains, as an essential component, the active hydrogen group-containing compound containing the above-described diol having 2 to 6 carbon atoms and the above-described hydrophilic group.

For the diol having 2 to 6 carbon atoms, preferably, alkanediol having 2 to 6 carbon atoms, more preferably, ethylene glycol is used.

These diols having 2 to 6 carbon atoms can be used alone or in combination of two or more.

A blending ratio of the diol having 2 to 6 carbon atoms relative to 100 parts by mass of the total amount of the second polyol component is, for example, 50 parts by mass or more, and for example, 80 parts by mass or less, preferably 70 parts by mass or less.

Examples of the active hydrogen group-containing compound containing a hydrophilic group include the above-described active hydrogen group-containing compounds, and preferably, an active hydrogen group-containing compound containing an ionic group is used, more preferably, a compound containing a combination of an anionic group and two or more hydroxy groups is used, further preferably, a carboxy group-containing polyol is used, particularly preferably, polyhydroxyalkanoic acid is used, most preferably, 2,2-dimethylolpropionic acid is used.

The blending ratio of the active hydrogen group-containing compound containing a hydrophilic group relative to 100 parts by mass of the total amount of the second polyol component is, for example, 10 parts by mass or more, preferably 20 parts by mass or more, more preferably 30 parts by mass or more, and for example, 50 parts by mass or less.

The second polyol component contains, as optional components, the above-described diol having 7 or more carbon atoms (dihydric alcohol), and the above-described low molecular weight polyol having a functionality of three or more.

Examples of the low molecular weight polyol having a functionality of three or more include the above-described low molecular weight polyols, and preferably, trihydric alcohol is used, more preferably, trimethylolpropane is used.

A blending ratio of the low molecular weight polyol having a functionality of three or more relative to 100 parts by mass of the total amount of the second polyol component is, for example, 1 part by mass or more, and for example, 20 parts by mass or less, preferably 10 parts by mass or less.

The second polyol component preferably contains a diol having 2 to 6 carbon atoms, an active hydrogen group-containing compound containing a hydrophilic group, and a low molecular weight polyol having a functionality of three or more, and more preferably consists of a diol having 2 to 6 carbon atoms, an active hydrogen group-containing compound containing a hydrophilic group, and a low molecular weight polyol having a functionality of three or more.

The isocyanate group-terminated prepolymer is produced by allowing the second polyisocyanate component to react with the second polyol component.

In the reaction of the second polyisocyanate component with the second polyol component, the above-described components are allowed to react in the same manner as in the reaction of the first polyisocyanate component with the first polyol component.

That is, in solution polymerization, the same organic solvent (solvent) and reaction catalyst can be used as in the reaction of the first polyisocyanate component with the first polyol component, and the reaction conditions (reaction temperature, reaction time, and equivalent ratio) are the same as those in the reaction of the first polyisocyanate component with the first polyol component.

In this manner, the isocyanate group-terminated prepolymer that is a reaction product of the second polyisocyanate component and the second polyol component is produced.

When the second polyisocyanate component is allowed to react with the second polyol component by solution polymerization, the isocyanate group-terminated prepolymer is produced as an isocyanate group-terminated prepolymer reaction solution containing the isocyanate group-terminated prepolymer and the organic solvent.

When an ionic group is contained in the isocyanate group-terminated prepolymer, preferably, the above-described neutralizing agent is added for neutralization to form a salt of the ionic group in the same manner as the above-described isocyanate group-terminated first prepolymer.

The thus produced isocyanate group-terminated prepolymer is a polyurethane prepolymer having at least one (preferably a plurality of, further preferably two) free isocyanate group at its molecular end, and the isocyanate group content (isocyanate group content based on the solid content excluding the solvent) is, for example, 0.3% by mass or more, preferably 1.0% by mass or more, and for example, 20% by mass or less, preferably 15% by mass or less.

The isocyanate group has an average functionality of, for example, 1.5 or more, and for example, 3.0 or less, preferably 2.5 or less.

Thereafter, in this method, the isocyanate group-terminated prepolymer produced as described above is allowed to react with the above-described chain extender, for example, in water, to produce an aqueous dispersion of polyurethane resin (referred to as an aqueous dispersion of second polyurethane resin in some cases).

Examples of the chain extender include the above-described chain extenders, and preferably, an amino group-containing component is used, more preferably, aminoalcohol is used, further preferably 2-((2-aminoethyl)amino)ethanol (also known as: N-(2-aminoethyl)ethanolamine) is used.

The aqueous dispersion of second polyurethane resin has a solid content concentration of, for example, 10% by mass or more, preferably 15% by mass or more, more preferably 20% by mass or more, and for example, 60% by mass or less, preferably 50% by mass or less, more preferably 45% by mass or less.

Furthermore, as necessary, the above-described additive can be blended in the aqueous dispersion of second polyurethane resin.

The blending ratio of the additives is not particularly limited, and is appropriately set in accordance with its purpose and application.

As necessary, a thermoplastic resin having gas barrier properties may be blended with the aqueous dispersion of second polyurethane resin to an extent that does not damage gas barrier properties.

Examples of the thermoplastic resin having gas barrier properties include polyvinyl alcohol, an ethylene-vinyl alcohol copolymer, a polyvinylidene chloride or vinylidene chloride copolymer, starch, and polysaccharides such as cellulose.

The above-described water-soluble organic solvent and the above-described wetting agent (e.g., modified polysiloxane copolymer) can also be added to the aqueous dispersion of second polyurethane resin.

As the details are described later, the gas barrier layer 6 is produced by applying and drying the aqueous dispersion of second polyurethane resin on one surface in the thickness direction of the polyolefin-based first film 3.

The gas barrier layer 6 has a mass per unit area of, for example, 0.8 g/m² or more, preferably 1.0 g/m² or more in view of improving the oxygen barrier properties of the gas barrier layer 6, and 5.0 g/m² or less, preferably 3.5 g/m² or less in view of suppressing blocking when the laminate 1 is produced and is then wound and processed.

### [Method for producing laminate]

The method for producing the laminate 1 includes a first step of preparing the polyolefin-based first film 3; a second step of disposing (laminating) the heat-resistant layer 2 on the other surface in the thickness direction of the polyolefin-based first film 3; a fifth step of disposing (laminating) the gas barrier layer 6 on one surface in the thickness direction of the polyolefin-based first film 3; a third step of disposing (laminating) the adhesive layer 4 on one surface in the thickness direction of the gas barrier layer 6, and a fourth step of disposing (laminating) the polyolefin-based second film 5 on one surface in the thickness direction of the adhesive layer 4.

The first and second steps are performed in the same manner as the one embodiment described above.

In the fifth step, the gas barrier layer 6 is disposed (laminated) on one surface in the thickness direction of the polyolefin-based first film 3.

To dispose (laminate) the gas barrier layer 6 on one surface in the thickness direction of the polyolefin-based first film 3, first, one surface in the thickness direction of the polyolefin-based first film 3 is preferably subjected to anchor coat treatment with the above-described anchor coat agent.

To be specific, the anchor coat agent is applied so that the mass per unit area of the anchor coat agent is, for example, 0.1 g/m² or more, and for example, 1.0 g/m² or less.

The application method is the same as that for the above-described heat-resistant layer 2.

The drying conditions are as follows: the drying temperature is, for example, 30°C or more, and for example, 80°C or less; and the drying time is, for example, 1 minute or more, and for example, 5 minutes or less.

One surface in the thickness direction of the polyolefin-based first film 3 may be subjected to the above-described surface treatment (preferably, corona treatment) instead of the anchor coat treatment.

Then, the aqueous dispersion of second polyurethane resin is applied and dried on one surface in the thickness direction of the polyolefin-based first film 3.

The application method is the same as that for the above-described heat-resistant layer 2.

The drying conditions are as follows: the drying temperature is, for example, 30°C or more, and for example, 80°C or less. And, the drying time is, for example, 10 seconds or more, preferably 20 seconds or more, and for example, 120 seconds or less.

In this manner, the gas barrier layer 6 is disposed (laminated) on one surface in the thickness direction of the polyolefin-based first film 3.

The third and fourth steps are performed in the same manner as the one embodiment described above. In this manner, the laminate 1 provided with the gas barrier layer 6 between the polyolefin-based first film 3 and the adhesive layer 4 is produced.

Although the laminate 1 provided with the gas barrier layer 6 between the polyolefin-based first film 3 and the adhesive layer 4 is described hereinabove, the laminate 1 provided with the gas barrier layer 6 between the heat-resistant layer 2 and the polyolefin-based first film 3 (see FIG. 6B), and the laminate 1 provided with the gas barrier layer 6 between the adhesive layer 4 and the polyolefin-based second film 5 (see FIG. 6C) can also be produced in the same manner as above. In detail, the laminate 1 provided with the gas barrier layer 6 between the heat-resistant layer 2 and the polyolefin-based first film 3 is produced by sequentially performing the first, fifth, second, third, and fourth steps. In addition, the laminate 1 provided with the gas barrier layer 6 between the adhesive layer 4 and the polyolefin-based second film 5 is produced by sequentially performing the first, second, third, fifth, and fourth steps.

In the above description, the substrate layer 21 sequentially includes the polyolefin-based second film 5, the adhesive layer 4, and the polyolefin-based first film 3 toward the thickness direction in the second laminate 20. However, the substrate layer 21 can be composed of a third film. In such a case, the second laminate 20 sequentially includes the third film and the heat-resistant layer 2 toward one side in the thickness direction.

The third film is, for example, at least one selected from the group consisting of a polyolefin-based film, a polyester-based film, and a nylon film.

Then, in the second laminate 20, an absolute value of the difference between the Martens hardness of one surface in the thickness direction of the heat-resistant layer 2 and that of the other side in the thickness direction of the substrate layer 21 is preferably 0.25 or more, for example, in view of suppressing sticking during heat sealing, and the upper limit thereof is not particularly limited, but it is preferably 0.80 or less, for example, in view of suppressing curling during expansion due to humidity and heat changes.

The Martens hardness (HMs) of the substrate layer 21 can be measured based on the following conditions.

### (Conditions)

### Testing machine: Ultra-micro hardness tester DUH-211 (manufactured by Shimadzu Corporation)

Type of indenter: Triangular 115
Test mode: Load/unload test
Test conditions: Test force: 0.5 mN, set depth: 1.0 µm, and load speed: 3.0 mN/sec.

The second laminate 20 is provided with the heat-resistant layer 2 on one surface in the thickness direction of the substrate layer 21 (third film), so that when the other surface of the substrate layer 21 is heat-sealed, heat-sealing of one surface of the substrate layer 21 can be suppressed.

### Example

The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF THE EMBODIMENTS". The "parts" and "%" are based on mass unless otherwise specified.

### 1. Details of components

H₁₂MDI: 4,4'-Methylenebis(cyclohexylisocyanate)
1,3-H₆XDI: 1,3-Bis(isocyanatomethyl)cyclohexane
m-XDI: 1,3-Xylylene diisocyanate
U-5620: Polyester polyol (polycondensate of adipic acid, 1,6-hexanediol and neopentyl glycol), number average molecular weight 2000, trade name "TAKELAC U-5620", manufactured by Mitsui Chemicals Inc.
U-9025: Polyester polyol (polycondensate of isophthalic acid, sebacic acid, ethylene glycol, and neopentyl glycol), number average molecular weight 2500, trade name "TAKELAC U-9025", manufactured by Mitsui Chemicals Inc.
T-6002: Polycarbonate diol (trade name: DURANOL T-6002, manufactured by Asahi Kasei Corporation)
DMPA: Dimethylolpropionic acid
DEA: N-methyldiethanolamine
EG: Ethylene glycol
TEG: Triethylene glycol
TMP: Trimethylolpropane
MEK: Methyl ethyl ketone
TEA: Triethylamine
KBM-603: Alkoxysilyl compound, N-2-(aminoethyl)-3-aminopropyltrimethoxysilane, manufactured by Shin-Etsu Chemical Co., Ltd.
A-EA: 2-((2-aminoethyl)amino)ethanol
EDA: Ethylenediamine
IPA: 2-Propanol
TAKENATE D-110N (trimethylolpropane (TMP) adduct of xylylene diisocyanate, isocyanate group content 11.5% by mass, solid content 75% by mass, solvent: ethyl acetate, manufactured by Mitsui Chemicals Inc.)
TM-50: Colloidal silica, average particle size 22 nm, solid content concentration 50% by mass, manufactured by W. R. Grace & Co.-Conn.
HS-30: Colloidal silica, average particle size 12 nm, solid content concentration 30% by mass, manufactured by W. R. Grace & Co.-Conn.
A2: Alumina sol, average particle size 66 nm, solid content concentration 13.9% by mass, Kawaken Fine Chemicals Co., Ltd.
F1000: Alumina sol, average particle size 169 nm, solid content 7.5% by mass, Kawaken Fine Chemicals Co., Ltd.
LLDPE: Straight chain low-density polyethylene film, film thickness 30 µm
LDPE: Low-density polyethylene film, film thickness 100 µm
OPP: Biaxially oriented polypropylene film, film thickness 20 µm
CPP: Cast (unoriented) polypropylene film, film thickness 60 µm

### 2. Synthesis of polyurethane resin

### Synthesis Example 1

At room temperature (25°C), in a 1 L-reactor equipped with a mixer, a thermometer, a condenser, and a nitrogen gas inlet tube, 123.7 parts by mass of U-5620, 18.6 parts by mass of TEG, 16.6 parts by mass of DMPA, and 141.0 parts by mass of MEK were charged, and the charged mixture was stirred at a liquid temperature of 60°C for 10 minutes.

Then, 113.6 parts by mass of H₁₂MDI was added to the reactor, and the reactor was warmed to a liquid temperature of 80°C to react. The amine equivalent weight was measured, and when the reaction rate of the isocyanate group reached 99.5% or more, the reaction solution was cooled to 40°C. Then, as a neutralizing agent, 12.5 parts by mass of TEA was added to the reaction solution, and the added mixture was stirred for 10 minutes. Thereafter, the reaction solution was cooled to 30°C to 40°C, transferred into 700 parts by mass of water in which 5.2 parts by mass of KBM-603 had been dissolved as a chain extender, and stirred to emulsify the solution. Then, as a chain extender, 9.8 parts by mass of A-EA was added thereto.

Then, under reduced pressure, MEK was distilled off from the reaction solution, and a portion of the water was also distilled off. In this manner, an aqueous dispersion of polyurethane resin (polyurethane dispersion) was produced.

### Synthesis Examples 2 to 5

According to the same procedure as in Synthesis Example 1, an aqueous dispersion of polyurethane resin (polyurethane dispersion) was produced. The blending formulations were, however, changed according to Table 1. In Synthesis Example 4, chain extension was not performed. To be specific, to the reaction solution after adding a neutralizing agent (acetic acid) and an organic solvent (acetonitrile), 970 parts by mass of water that had been cooled to 15°C to 25°C was added without adding a chain extender, and stirred to emulsify the solution.

### 3. Preparation of aqueous polyurethane composition

### Preparation Examples 1 to 14 and 17

According to the blending formulations in Table 2, ion-exchange water and a watersoluble organic solvent were mixed in a glass bottle. Then, inorganic particles were blended therein. When the inorganic particles were colloidal silica or alumina sol, the aqueous dispersion of inorganic particles was blended by stirring with a magnetic stirrer. Then, an aqueous dispersion of polyurethane resin was blended. In this manner, an aqueous polyurethane composition was prepared. In Table 2, the polyurethane resin is expressed in parts by mass of the aqueous dispersion of polyurethane resin, and the inorganic particles are expressed in parts by mass of the aqueous dispersion of inorganic particles.

In Preparation Examples 15 and 18, no inorganic particles were blended. In Preparation Example 16, the aqueous dispersion of polyurethane resin was not blended.

### 4. Production of laminate

### Example 1

### [First step]

LLDPE was prepared as a first film.

### [Second step]

The other surface in the thickness direction of the first film was subjected to corona treatment. After the treatment, the other surface in the thickness direction of the first film had a surface wetting tension of 41 dyn or more.

Next, the aqueous polyurethane composition of Preparation Example 1 was applied to the other surface in the thickness direction of the first film by a bar coating method and then dried at 60°C for 30 seconds. In this manner, a heat-resistant layer was disposed (laminated) on the other surface in the thickness direction of the first film.

### [Third step]

Adhesives for dry lamination (TAKELAC A-969V (manufactured by Mitsui Chemicals, Inc.) and TAKENATE A-5 (manufactured by Mitsui Chemicals, Inc.)) were applied to one surface in the thickness direction of the first film by the bar coating method so as to have a dry thickness of 3 g/m², and then dried with a dryer. In this manner, an adhesive layer was disposed (laminated) on one surface in the thickness direction of the first film.

### [Fourth step]

A second film (LLDPE) was disposed (laminated) on one surface in the thickness direction of the adhesive layer. Thereafter, the second film was aged at 40°C for 2 days. In this manner, a laminate was produced.

### Examples 2 to 23 and Comparative Examples 1 to 8

According to the same procedure as in Example 1, laminate were produced. The formulations were, however, changed according to Tables 3 to 5. In Comparative Examples 5 to 8, the second step was not performed (no heat-resistant layer was disposed). In Comparative Example 4, inorganic particles (colloidal silica) dropped from the heat-resistant layer, thereby failing to form a heat-resistant layer.

### Example 24

### [First step]

LLDPE was prepared as a first film.

### [Second step]

The other surface in the thickness direction of the first film was subjected to corona treatment. After the treatment, the other surface in the thickness direction of the first film had a surface wetting tension of 41 dyn or more.

Next, the aqueous polyurethane composition of Preparation Example 3 was applied to the other surface in the thickness direction of the first film by a bar coating method and then dried at 60°C for 30 seconds. In this manner, a heat-resistant layer was disposed (laminated) on the other surface in the thickness direction of the first film.

### [Fifth step]

Using an anchor coat agent (2.6 g of TAKENATE D-110N and 97.4 g of ethyl acetate), one surface in the thickness direction of the first film was subjected to anchor coat treatment so that the mass per unit area of the anchor coat was 0.2 g/m².

Next, the aqueous polyurethane composition of Preparation Example 18 was applied to one surface in the thickness direction of the first film by the bar coating method and then dried at 60°C for 30 seconds. In this manner, a gas barrier layer was disposed (laminated) on one surface in the thickness direction of the first film.

### [Third step]

Adhesives for dry lamination (TAKELAC A-969V (manufactured by Mitsui Chemicals, Inc.) and TAKENATE A-5 (manufactured by Mitsui Chemicals, Inc.)) were applied to one surface in the thickness direction of the gas barrier layer by the bar coating method so as to have a dry thickness of 3 g/m², and then dried with a dryer. In this manner, an adhesive layer was disposed (laminated) on one surface in the thickness direction of the gas barrier layer.

### [Fourth step]

A second film (LLDPE) was disposed (laminated) on one surface in the thickness direction of the adhesive layer. Thereafter, the second film was aged at 40°C for 2 days. In this manner, a laminate was produced.

### Examples 25 and 26

According to the same procedure as in Example 24, laminates were produced. The formulations were, however, changed according to Table 4. In the fifth step, corona treatment (one surface in the thickness direction of the first film had a surface wetting tension of 50 dyn or more) was performed instead of the anchor coat treatment.

### 5. Evaluation

### <Average particle size of polyurethane dispersion>

The average particle sizes of the polyurethane dispersions of Synthesis Examples were measured. To be specific, the average particle sizes were measured using a Fiber-Optics Particle Analyzer FPAR-1000 (manufactured by Otsuka Electronics Co., Ltd.). The results are shown in Table 1.

### <Viscosity of polyurethane dispersion>

The viscosities of the polyurethane dispersions of Synthesis Examples were measured. To be specific, the viscosities at 25°C were measured in accordance with JIS K 7117 (1999). The results are shown in Table 1.

### <Appearance of heat-resistant layer>

The surface appearances of the heat-resistant layers in Examples and Comparative Examples were visually observed and evaluated based on the following criteria.
Excellent: No repellency, unevenness, or cloudiness was observed.
Good: Slight cloudiness was observed.
Fair: Spot-like fine repellency was observed.
Bad: At least one of repellency, unevenness, and cloudiness was observed.

### <Blocking properties>

For Examples and Comparative Examples, the other surface in the thickness direction of the laminate (heat-resistant layer) and one surface in the thickness direction of the laminate (second film) were brought into contact with an area of 20 cm² and stored under conditions of 50°C/10 kg/48 hours. Then, the laminates were peeled off in the shearing direction at a speed of 300 mm/min by a tensile tester. The results are shown in Tables 3 to 5.

### <Heat resistance>

The heat-resistant layers of Examples and Comparative Examples were brought into contact with each other and heat-sealed under conditions of 120°C, 0.2 MPa and 1 second using a TP-701-B-HEAT SEAL TESTER manufactured by Tester Sangyo Co., Ltd. At this time, in order to prevent sticking to the heat seal bar, the layers were heat-sealed through a PET film.

Then, T-peeling was performed at a speed of 300 mm/min by a tensile tester to measure the strength (mN/20 mm). The results are shown in Tables 3 to 5. In Tables, "substrate breakage" refers that the substrates were not peeled from each other at an interface therebetween but substrate breakage occurred.

In Comparative Examples (Comparative Examples 5 to 8) without heat-resistant layers, the first films were brought into contact with each other and then heat-sealed in the same manner as above.

FT-IR measurements were performed on the heat-resistant layers after being peeled off to examine the remaining state of the heat-resistant layer.

The remaining state of the heat-resistant layer was evaluated based on the following criteria.
Excellent: The FT-IR measurement showed that the heat-resistant layer remained.
Good: The FT-IR measurement showed that the heat-resistant layer remained, but the peak intensity ratio was different.
Bad: The FT-IR measurement showed that no heat-resistant layers remained.

### <Measurement of hardness of heat-resistant layer>

The aqueous polyurethane compositions of Preparation Examples 2 to 15 and 17 were each used to form a heat-resistant layer with a coating weight of 1.5 g on a 12 µm-thick PET film. The Martens hardness (HMs, N/mm²) of the surface of the formed heat-resistant layer was measured using an ultra-micro hardness tester under the following conditions and then evaluated.

### (Conditions)

Testing machine: DUH-211 (manufactured by Shimadzu Corporation)
Type of indenter: Triangular 115
Test mode: Load/unload test
Test conditions: Test force: 0.5 mN, set depth: 1.0 µm, and load speed: 3.0 mN/sec.

### (Measurement of oxygen transmittance (OTR)>

The oxygen transmission amounts (OTR) of the laminates of Examples 24 to 26 per 1 m², 1 day and 1 atmospheric pressure at 20°C and 80% relative humidity (80% RH) were measured using an oxygen transmission measurement device (OX-TRAN 2/20, manufactured by MOCON, Inc). The results are shown in Table 4.

### 6. Consideration

In the evaluation of the heat resistance, the laminates of Examples 1 to 26 had lower strength than those of Comparative Examples 1 to 8. That is, it can be seen that heat-sealing between the first films was suppressed through the heat-resistant layer.

From this, it can be seen that when the second film is heat-sealed, heat-sealing of the first film can be suppressed.

### [Table 1]

**TABLE 1**

| Synthesis Example Nos. | | | | Syn. Ex. 1 | Syn. Ex. 2 | Syn. Ex. 3 | Syn. Ex. 4 | Syn. Ex. 5 |
|---|---|---|---|---|---|---|---|---|
| First or second polyisocyanate component | Polyisocyanate having a ring structure | Alicyclic polyisocyanate | H₁₂MDI | 113.6 | 116.7 | 89.2 | - | 25.0 |
| | | | 1,3-H6XDI | - | - | - | 74.8 | - |
| | | Aromatic polyisocyanate | m-XDI | - | - | - | - | 143.2 |
| First or second polyol component | Macropolyol | Polyester polyol | U-5620 | 123.7 | 127.1 | - | - | - |
| | | | U-9025 | - | - | 161.8 | - | - |
| | | Polycarbonate polyol | T-6002 | - | - | - | 291.1 | - |
| | Active hydrogen group-containing compound containing a hydrophilic group | Active hydrogen group-containing compound containing an anionic group | DMPA | 16.6 | 17.0 | 21.7 | - | 14.8 |
| | | Active hydrogen group-containing compound containing a cationic group | DEA | - | - | - | 15.5 | - |
| | Low molecular weight polyol | Diol having 2 to 6 carbon atoms | EG | - | - | - | - | 29.2 |
| | | | TEG | 18.6 | 19.1 | 2.4 | - | - |
| | | Other low molecular weight polyol | TMP | - | - | - | - | 2.7 |
| Organic solvent | MEK | | | 141.0 | 141.0 | 141.0 | - | 121.6 |
| | Acetonitrile | | | - | - | - | 272.4 | - |
| Neutralizing agent | TEA | | | 12.5 | 12.8 | 11.5 | - | 11.0 |
| | Acetic acid | | | - | - | - | 27.3 | - |
| Chain extender | KBM-603 | | | 5.2 | - | 7.2 | - | - |
| | A-EA | | | 9.8 | - | 6.2 | - | 28.0 |
| | EDA | | | - | 7.3 | - | - | - |
| Water | | | | 700.0 | 700.0 | 700.0 | 970.0 | 682.1 |
| Solid content concentration (mass%) | | | | 30.0 | 30.0 | 30.0 | 32.5 | 30.0 |
| Average particle size (nm) | | | | 43.0 | 31.2 | 35.8 | 63.0 | 60.0 |
| Viscosity (mPa·s) | | | | 32.0 | 25.0 | 33.0 | 16.0 | 13.0 |
| pH | | | | 8.0 | 7.0 | 6.8 | 5.7 | 8.6 |

### [Table 2]

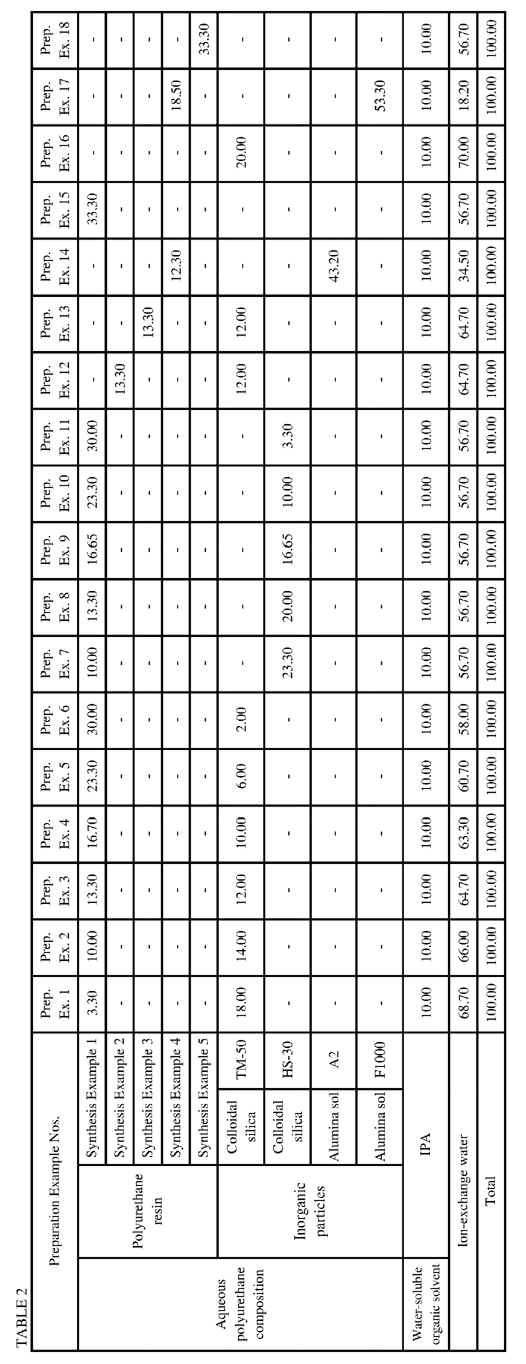

### [Table 3]

**TABLE 3**

| Example & Comparative Example Nos. | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|---|
| Heat-resistant layer | Aqueous polyurethane composition | Type | Prep. Ex. 1 | Prep. Ex. 2 | Prep. Ex. 3 | Prep. Ex. 4 | Prep. Ex. 5 | Prep. Ex. 6 | Prep. Ex. 3 | Prep. Ex. 3 | Prep. Ex. 3 | Prep. Ex. 3 | Prep. Ex. 3 |
| | | Blending ratio relative to total amount of polyurethane resin and inorganic particles (mass%) | 10 | 30 | 40 | 50 | 70 | 90 | 40 | 40 | 40 | 40 | 40 |
| | Inorganic particles | Type | Colloidal silica | Colloidal silica | Colloidal silica | Colloidal silica | Colloidal silica | Colloidal silica | Colloidal silica | Colloidal silica | Colloidal silica | Colloidal silica | Colloidal silica |
| | | Average particle size (nm) | 22 | 22 | 22 | 22 | 22 | 22 | 22 | 22 | 22 | 22 | 22 |
| | | Blending ratio relative to total amount of polyurethane resin and inorganic particles (mass%) | 90 | 70 | 60 | 50 | 30 | 10 | 60 | 60 | 60 | 60 | 60 |
| | Mass per unit area | g/m² | 0.5 | 0.5 | 0.5 | 0.5 | 0.5 | 0.5 | 0.1 | 0.3 | 1.2 | 2.0 | 3.5 |
| Polyolefin-based first film | Type | | LLDPE | LLDPE | LLDPE | LLDPE | LLDPE | LLDPE | LLDPE | LLDPE | LLDPE | LLDPE | LLDPE |
| Gas barrier layer | Type | | - | - | - | - | - | - | - | - | - | - | - |
| | Mass per unit area | g/m² | - | - | - | - | - | - | - | - | - | - | - |
| Polyolefin-based second film | Type | | LLDPE | LLDPE | LLDPE | LLDPE | LLDPE | LLDPE | LLDPE | LLDPE | LLDPE | LLDPE | LLDPE |
| Evaluation | Appearance after coating | | Fair | Excellent | Excellent | Excellent | Excellent | Excellent | Bad | Excellent | Excellent | Excellent | Bad |
| | Blocking properties | Peel force (N/20mm) | 0.1 | 0.1 | 0.1 | 0.1 | 1.5 | 2.8 | 0.9 | 0.3 | 0.5 | 0.6 | 0.6 |
| | 160°C Heat resistance | Peel force (N/20mm) | 0.3 | 0.3 | 0.3 | 0.4 | 0.8 | 0.9 | 1.3 | 0.7 | 0.9 | 0.8 | 0.8 |
| | | Remaining of coating | Excellent | Excellent | Excellent | Excellent | Excellent | Good | Good | Excellent | Excellent | Excellent | Excellent |
| | Hardness (Martens hardness [HMs](N/mm²)) | | - | 0.45 | 0.44 | 0.39 | 0.43 | 0.35 | 0.44 | 0.44 | 0.44 | 0.44 | 0.44 |
| | OTR | | - | - | - | - | - | - | - | - | - | - | - |

### [Table 4]

**TABLE 4**

| Example & Comparative Example Nos. | | | Ex. 12 | Ex. 13 | Ex. 14 | Ex. 15 | Ex. 16 | Ex. 17 | Ex. 18 | Ex. 19 | Ex. 20 | Ex. 21 | Ex. 22 | Ex. 23 | Ex. 24 | Ex. 25 | Ex. 26 |
|---|---|---|---|---|---|---|---|---|---|---|---|---|---|---|---|---|---|
| Heat-resistant layer | Aqueous polyurethane composition | Type | Prep. Ex. 7 | Prep. Ex. 8 | Prep. Ex. 9 | Prep. Ex. 10 | Prep. Ex. 11 | Prep. Ex. 12 | Prep. Ex. 13 | Prep. Ex. 3 | Prep. Ex. 3 | Prep. Ex. 3 | Prep. Ex. 14 | Prep. Ex. 17 | Prep. Ex. 3 | Prep. Ex. 3 | Prep. Ex. 14 |
| | | Blending ratio relative to total amount of polyurethane resin and inorganic particles (mass%) | 30 | 40 | 50 | 70 | 90 | 40 | 40 | 40 | 40 | 40 | 40 | 40 | 40 | 40 | 40 |
| | Inorganic particles | Type | Colloidal silica | Colloidal silica | Colloidal silica | Colloidal silica | Colloidal silica | Colloidal silica | Colloidal silica | Colloidal silica | Colloidal silica | Colloidal silica | Alumina sol | Alumina sol | Colloidal silica | Colloidal silica | Alumina sol |
| | | Average particle size (nm) | 12 | 12 | 12 | 12 | 12 | 22 | 22 | 22 | 22 | 22 | 66 | 169 | 22 | 22 | 66 |
| | | Blending ratio relative to total amount of polyurethane resin and inorganic particles (mass%) | 70 | 60 | 50 | 30 | 10 | 60 | 60 | 60 | 60 | 60 | 60 | 60 | 60 | 60 | 60 |
| | Mass per unit area | g/m² | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Polyolefin-based first film | Type | | LLDPE | LLDPE | LLDPE | LLDPE | LLDPE | LLDPE | LLDPE | LDPE | CPP | OPP | LLDPE | LLDPE | LLDPE | LLDPE | LLDPE |
| Gas barrier layer | Type | | - | - | - | - | - | - | - | - | - | - | - | - | Prep. Ex. 18 | Prep. Ex. 18 | Prep. Ex. 18 |
| | Mass per unit area | g/m² | - | - | - | - | - | - | - | - | - | - | - | - | 2.5 | 2.5 | 2.5 |
| Polyolefin-based second film | Type | | LLDPE | LLDPE | LLDPE | LLDPE | LLDPE | LLDPE | LLDPE | LDPE | CPP | CPP | LLDPE | LLDPE | LLDPE | LLDPE | LLDPE |
| Evaluation | Appearance after coating | | Excellent | Excellent | Excellent | Excellent | Excellent | Excellent | Excellent | Excellent | Excellent | Excellent | Excellent | Bad | Excellent | Excellent | Excellent |
| | Blocking properties | Peel force (N/20mm) | 0.1 | 0.1 | 0.2 | 1.5 | 2.8 | 0.2 | 0.1 | 0.2 | 0.3 | 0.1 | 0.3 | 0.2 | 0.1 | 0.1 | 0.3 |
| | 160°C Heat resistance | Peel force (N/20mm) | 0.2 | 0.3 | 0.5 | 0.8 | 0.8 | 0.4 | 0.2 | 0.6 | 0.5 | 0.2 | 0.4 | 0.5 | 0.3 | 0.3 | 0.4 |
| | | Remaining of coating | Excellent | Excellent | Excellent | Excellent | Good | Excellent | Excellent | Excellent | Excellent | Excellent | Excellent | Excellent | Excellent | Excellent | Excellent |
| | Hardness (Martens hardness [HMs](N/mm²)) | | 0.44 | 0.48 | 0.45 | 0.44 | 0.43 | 0.44 | 0.43 | 0.44 | 0.44 | 0.44 | 0.38 | 0.48 | 0.44 | 0.44 | 0.44 |
| | OTR | | - | - | - | - | - | - | - | - | - | - | - | - | 22 | 26 | 23 |

### [Table 5]

**TABLE 5**

| Example & Comparative Example Nos. | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|
| Heat-resistant layer | Aqueous polyurethane composition | Type | Prep. Ex. 15 | Prep. Ex. 15 | Prep. Ex. 15 | Prep. Ex. 16 | - | - | - | - |
| | | Blending ratio relative to total amount of polyurethane resin and inorganic particles (mass%) | 100 | 100 | 100 | 0 | - | - | - | - |
| | Inorganic particles | Type | - | - | - | Colloidal silica | - | - | - | - |
| | | Average particle size (nm) | - | - | - | 22 | - | - | - | - |
| | | Blending ratio relative to total amount of polyurethane resin and inorganic particles (mass%) | 0 | 0 | 0 | 100 | 0 | 0 | 0 | 0 |
| | Mass per un it area | g/m² | 0.5 | 0.3 | 1.2 | 0.5 | - | - | - | - |
| Polyolefin-based first film | Type | | LLDPE | LLDPE | LLDPE | LLDPE | LLDPE | LDPE | CPP | OPP |
| Gas barrier layer | Type | | - | - | - | - | - | - | - | - |
| | Mass per unit area | g/m² | - | - | - | - | - | - | - | - |
| Polyolefin-based second film | Type | | LLDPE | LLDPE | LLDPE | LLDPE | LLDPE | LDPE | CPP | CPP |
| Evaluation | Appearance after coating | | Excellent | Excellent | Excellent | Bad | - | - | - | - |
| | Blocking properties | Peel force (N/20mm) | 3.5 | 4.3 | more than 10 | - | 0.3 | 0.5 | 0.3 | 0.1 |
| | 160°C Heat resistance | Peel force (N/20mm) | 1.2 | 1.1 | - | - | Substrate breakage | Substrate breakage | Substrate breakage | Substrate breakage |
| | | Remaining of coating | Good | Good | Bad | - | - | - | - | - |
| | Hardness (Martens hardness [HMs](N/mm²)) | | 0.33 | 0.33 | 0.33 | - | - | - | - | - |
| | OTR | | - | - | - | - | - | - | - | - |

While the illustrative embodiments of the present invention are provided in the above-described invention, such is for illustrative purpose only and it is not to be construed restrictively. Modification and variation of the present invention that will be obvious to those skilled in the art is to be covered by the following calims.

### Industrial Applicability

The aqueous polyurethane composition, heat-resistant coating agent, first laminate, bag, second laminate, method for producing the first laminate, and method for producing the second laminate according to the present invention can be suitably used, for example, in the field of packaging materials.

### Description of Reference Numerals

- 1: first laminate
- 2: heat-resistant layer
- 3: polyolefin-based first film
- 4: adhesive layer
- 5: polyolefin-based second film
- 6: gas barrier layer
- 20: second laminate
- 21: substrate layer

## Claims

1. An aqueous polyurethane composition,
comprising polyurethane resin and inorganic particles,
the polyurethane resin comprising a reaction product of a polyisocyanate component comprising polyisocyanate having a ring structure, and a polyol component comprising a macropolyol and an active hydrogen group-containing compound containing a hydrophilic group,
wherein relative to a total amount of the polyurethane resin and the inorganic particles,
a blending ratio of the polyurethane resin is 5% by mass or more and 95% by mass or less, and
a blending ratio of the inorganic particles is 5% by mass or more and 95% by mass or less, and
the inorganic particles have an average particle size of 5 nm or more and 1000 nm or less.

2. The aqueous polyurethane composition according to claim 1, wherein the active hydrogen group-containing compound containing a hydrophilic group is a compound containing a combination of a carboxy group, and a hydroxy group and/or an amino group.

3. The aqueous polyurethane composition according to claim 1, wherein the inorganic particles are colloidal inorganic particles.

4. A heat-resistant coating agent comprising the aqueous polyurethane composition according to claim 1.

5. A first laminate, sequentially comprising
a heat-resistant layer;
a polyolefin-based first film;
an adhesive layer; and
a polyolefin-based second film toward one side in a thickness direction,
wherein the heat-resistant layer is a dried product of the aqueous polyurethane composition according to claim 1.

6. The first laminate according to claim 5, wherein the heat-resistant layer has a mass per unit area of 0.1 g/m² or more and 3.3 g/m² or less.

7. The first laminate according to claim 5, wherein the inorganic particles have an average particle size of 5 nm or more and 170 nm or less.

8. The first laminate according to claim 5, wherein the heat-resistant layer has a hardness of 0.35 N/mm² or more and 0.6 N/mm² or less, the hardness being measured under the following conditions:
(Conditions)
A Martens hardness (HMs, N/mm²) is measured on a surface of the heat-resistant layer with a coating weight of 1.5 g using an ultra-micro hardness tester. In the measurement, a test force is 0.5 mN, a set depth is 1.0 µm, and a load speed is 3.0 mN/sec.

9. The first laminate according to claim 5, wherein the first film and the second film contain at least one selected from the group consisting of polyethylene, polypropylene, an ethylene-based copolymer, and a propylene-based copolymer.

10. The first laminate according to claim 5, wherein the heat-resistant layer is disposed directly on another surface in the thickness direction of the first film, and
the other surface in the thickness direction of the first film is subjected to at least one surface treatment selected from the group consisting of corona treatment, flame treatment, plasma treatment, and ultraviolet treatment.

11. The first laminate according to claim 5, comprising a gas barrier layer between the heat-resistant layer and the first film, and/or between the first film and the adhesive layer, and/or between the adhesive layer and the second film.

12. The first laminate according to claim 11, wherein the gas barrier layer is a dried product of a polyurethane dispersion containing polyurethane resin that is a reaction product of an isocyanate group-terminated prepolymer and a chain extender, the isocyanate group-terminated prepolymer being a reaction product of a polyisocyanate component comprising xylylene diisocyanate, and a polyol component comprising a diol having 2 to 6 carbon atoms and an active hydrogen group-containing compound containing a hydrophilic group.

13. The first laminate according to claim 11, wherein the gas barrier layer has a mass per unit area of 0.8 g/m² or more and 3.5 g/m² or less.

14. The first laminate according to claim 5, wherein the first film and the second film are both identical.

15. A bag being made of the first laminate according to claim 5.

16. A second laminate, sequentially comprising a substrate layer and a heat-insulating layer toward one side in the thickness direction,
wherein the heat-resistant layer is a dried product of the aqueous polyurethane composition according to claim 1, and
the substrate layer is at least one selected from the group consisting of a polyolefin-based film, a polyester-based film, and a nylon film.

17. The second laminate according to claim 16, wherein an absolute value of a difference between a Martens hardness of one surface in the thickness direction of the heat-resistant layer and a Martens hardness of an other side in the thickness direction of the substrate layer is 0.25 or more and 0.80 or less.

18. A method for producing a first laminate, comprising:
a first step of preparing a polyolefin-based first film;
a second step of disposing a heat-resistant layer by applying the aqueous polyurethane composition according to claim 1 to another surface in the thickness direction of the polyolefin-based first film and drying the applied composition;
a third step of disposing an adhesive layer on one surface in the thickness direction of the polyolefin-based first film; and
a fourth step of disposing a polyolefin-based second film on one surface in the thickness direction of the adhesive layer.

19. A method for producing a second laminate, comprising:
a fifth step of preparing a substrate layer; and
a sixth step of disposing a heat-resistant layer by applying the aqueous polyurethane composition according to claim 1 to one surface in the thickness direction of the substrate layer and drying the applied composition,
wherein in the fifth step, one surface in the thickness direction of the substrate layer is subjected to at least one surface treatment selected from the group consisting of corona treatment, flame treatment, plasma treatment, and ultraviolet treatment.
